(19) Europäisches Patentamt
European Patent Office
Office européen des brevets

(11) EP 3 077 460 B1

(12) FASCICULE DE BREVET EUROPEEN

(45) Date de publication et mention de la délivrance du brevet:
**05.09.2018 Bulletin 2018/36**

(21) Numéro de dépôt: **14825403.0**

(22) Date de dépôt: **03.12.2014**

(51) Int Cl.:
***C08L 83/04*** (2006.01) ***C09D 183/04*** (2006.01)
***C07F 7/00*** (2006.01)

(86) Numéro de dépôt international:
**PCT/FR2014/053141**

(87) Numéro de publication internationale:
**WO 2015/082837 (11.06.2015 Gazette 2015/23)**

# (54) COMPOSITION SILICONE DURCISSABLE EN PRESENCE D'EAU OU D'HUMIDITE DE L'AIR

IN GEGENWART VON WASSER ODER LUFTFEUCHTIGKEIT HÄRTBARE SILIKONZUSAMMENSETZUNG

SILICONE COMPOSITION THAT CAN BE CURED IN THE PRESENCE OF WATER OR ATMOSPHERIC MOISTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.12.2013 FR 1362008**

(43) Date de publication de la demande:
**12.10.2016 Bulletin 2016/41**

(73) Titulaires:
- **Bluestar Silicones France SAS**
  **69003 Lyon (FR)**
- **Université Claude Bernard Lyon 1**
  **69922 Villeurbanne (FR)**
- **CNRS**
  **Centre National de la Recherche Scientifique**
  **75016 Paris (FR)**

(72) Inventeurs:
- **MONTEIL, Vincent**
  **F-69003 Lyon (FR)**
- **SPITZ, Roger**
  **F-69006 Lyon (FR)**
- **MONDIERE, Aurélie**
  **F-69003 Lyon (FR)**
- **IRELAND, Tania**
  **F-38110 Cessieu (FR)**
- **SEGGIO, Anne**
  **F-69007 Lyon (FR)**

(74) Mandataire: **Mekki, Boualem et al**
**Elkem Silicones France SAS**
**Dépt. Brevets - Bât. 77**
**55, avenue des Frères Perret**
**69190 Saint-Fons (FR)**

(56) Documents cités:
**FR-A1- 2 856 694 US-A1- 2013 295 298**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 077 460 B1

## Description

### DOMAINE DE L'INVENTION

La présente invention concerne une nouvelle composition durcissable en présence d'eau ou d'humidité de l'air, de préférence à température ambiante, communément appelée silicone RTV (pour « Room Temperature Vulcanizable »). Plus spécifiquement, l'invention concerne une composition durcissable en présence d'eau ou d'humidité de l'air comprenant au moins un polyorganosiloxane **A** ayant un ou plusieurs groupement(s) condensable(s) ou hydrolysable(s) et condensable(s) et au moins un composé **C** qui est un complexe hétérométallique, permettant de s'affranchir de l'utilisation de catalyseur à base d'étain.

### ARRIERE-PLAN TECHNOLOGIQUE

Les formulations de silicones durcissables de préférence à température ambiante (ou silicones RTV) sont fabriquées en grands tonnages et sont utilisées pour la réalisation de mastics, de joints d'étanchéité, de pièces de moulage, de colles, de mousses... Classiquement, ces formulations contiennent une huile silicone à terminaison hydroxylée, par exemple un $\alpha,\omega$-(hydroxydiméthylsilyl)-polydiméthylsiloxane, éventuellement préfonctionnalisée par un silane pour présenter des extrémités hydrolysables et condensables, un agent réticulant, un catalyseur de polycondensation, classiquement un sel d'étain ou un titanate d'alkyle, et éventuellement des charges et des additifs divers suivant l'application finale visée.

Ces compositions silicones qui durcissent par polymérisation et/ou réticulation dès la température ambiante (qui peut varier suivant les régions entre 5° et 30° C) sont bien connues de l'homme de l'art et sont classées en deux groupes distincts :

- les compositions emballées sous la forme d'une composition « monocomposante » (RTV-1), qui se présentent sous la forme d'une seule partie (ou composante) dont l'emballage est étanche à l'air, et
- les compositions emballées sous la forme d'une composition « bicomposante » (RTV-2) qui se présentent sous la forme de deux parties distinctes (d'où l'appellation « bicomposante ») et dont l'emballage contenant le catalyseur est étanche à l'air.

Les emballages étanches à l'air ont pour but d'éviter la mise en contact des compositions silicones contenant le catalyseur avec l'humidité de l'air lors du stockage avant utilisation. Lors du durcissement qui intervient par polymérisation et/ou réticulation de ces compositions silicones, l'eau est apportée par l'humidité atmosphérique dans le cas des RTV-1. Dans le cas des RTV-2, les dicarboxylates de diméthyl étain sont couramment utilisés comme catalyseurs, mais ils peuvent nécessiter l'addition d'une quantité d'eau dans l'une des parties afin d'activer le catalyseur et permettre la réaction de polycondensation lorsque les contenus des deux parties sont mélangés à l'air ambiant de manière à former le réseau élastomérique qui se traduit par un durcissement de la composition.

Par exemple, les compositions silicones monocomposantes (RTV-1) utilisées comme mastics ou adhésifs réticulent à froid suivant un mécanisme faisant intervenir un certain nombre de réactions qui peuvent être successives ou simultanées :

- Une réaction de fonctionnalisation qui résulte de la mise en présence d'une huile silicone ayant des fonctions silanols, par exemple une huile silicone à terminaison hydroxylée, telles qu'un $\alpha,\omega$-(hydroxydiméthylsilyl)-polydiméthylsiloxane, avec un réticulant, tel qu'un silane de type $SiX_4$ (par exemple un silicate) ou un composé ayant la fonction suivante $-SiX_3$ avec X étant le plus souvent une fonction alcoxy, acyloxy, amino, amido, énoxy, aminoxy, cétiminoxy ou oxime. Ces fonctions sont bien connues pour être réactives avec les fonctions silanols. Le produit résultant est dénommé le plus souvent « huile fonctionnalisée ». Cette réaction peut être souhaitée directement lors de la préparation de la composition (fonctionnalisation in-situ) ou éventuellement comme pré-étape avant l'addition des autres composants de la composition. Dans cette pré-étape, il est courant d'utiliser un catalyseur de fonctionnalisation tel que la lithine (ou hydroxyde de lithium) ou la potasse afin de conférer à la composition monocomposante une bonne stabilité au stockage. Pour ce faire, l'homme du métier pourra choisir des catalyseurs spécifiques de fonctionnalisation et ajustera la quantité des réactifs de manière à être en excès molaire de réticulant par rapport aux fonctions silanols à fonctionnaliser.
- Une réticulation par l'intermédiaire d'une hydrolyse de l'huile fonctionnalisée généralement effectuée grâce à la vapeur d'eau qui diffuse dans le matériau à partir de la surface exposée à l'atmosphère, et d'une condensation entre les groupements silanols formés et d'autres fonctions réactives résiduelles.

Quant aux compositions emballées sous la forme de composition bicomposante (RTV-2), la première composante (ou partie) comprend les polyorganosiloxanes susceptibles de polycondenser et la deuxième composante, qui est étanche à l'air, contient le catalyseur et un ou plusieurs réticulant(s). Les deux composantes (ou parties) sont mélangées lors de l'emploi et le mélange durcit par des réactions de réticulation sous la forme d'un élastomère relativement dur, notamment lorsque la composition comprend des charges de renfort. Ces compositions emballées dans des systèmes à deux composantes sont bien connues et sont notamment décrites dans l'ouvrage de Walter Noll « Chemistry and Technology of Silicones » 1968, 2e édition aux pages 395 à 398. Ces compositions comportent le plus souvent les ingrédients suivants :

- un polyorganosiloxane réactif avec des groupements silanols en bout de chaîne (par exemple un $\alpha,\omega$-di(hydroxydiméthylsilyl)(polydiméthylsiloxane), dans la chaîne, ou à la fois en bout de chaîne et dans la chaîne ;
- un agent de réticulation ;
- un catalyseur de condensation ; et
- éventuellement de l'eau, souvent présente lorsqu'un dicarboxylate de dialkylétain est utilisé comme catalyseur, l'eau servant d'activateur audit catalyseur.

Les catalyseurs les plus connus, utilisés depuis des décennies aussi bien dans les compositions monocomposantes que bicomposantes, sont des dérivés d'étain. On peut notamment citer les composés à base d'alkylétain, tel que le dilaurate de dibutyl-étain (DBTDL), qui sont connus pour leur bonne efficacité à catalyser la réticulation tout en étant liquides, solubles dans les huiles silicones et incolores. Cependant, ils présentent l'inconvénient d'être toxiques et classés CMR II, toxiques pour la reproduction. Le remplacement des catalyseurs à base d'étain représente actuellement un défi majeur pour les acteurs de ce domaine technique.

Des catalyseurs alternatifs ont déjà été proposés dans l'art antérieur, notamment des catalyseurs à base de titane (voir par exemple la demande internationale de brevet WO 2013/036546). De nombreux autres catalyseurs ont été mentionnés, par exemple des catalyseurs à base de zinc, de scandium, d'ytterbium, de cuivre, d'argent, de cérium, de molybdène, de bismuth, d'hafnium ou de dérivés de guanidine. L'utilisation de chélates de zirconium ou de titane a été décrite en particulier dans la demande internationale de brevet WO 01/49789. Par ailleurs, il a été proposé dans la demande de brevet FR 2 856 694 l'emploi de catalyseurs mixtes consistant en l'association d'au moins deux dérivés métalliques, le premier étant un dérivé du titane ou du zirconium, et le second étant un dérivé du zinc, de l'aluminium, du bore ou du bismuth. Les catalyseurs mixtes sont obtenus en associant simplement plusieurs catalyseurs monométalliques au moment de la formulation. Même si des effets intéressants sont obtenus, en particulier en termes de jaunissement et d'adhérence, ces catalyseurs métalliques ne permettent pas d'atteindre les cinétiques de réticulation et les duretés des élastomères obtenus avec des catalyseurs à base d'étain.

Dans ce contexte, un des objectifs de la présente invention est de proposer de nouveaux catalyseurs de condensation non toxiques pour remplacer les catalyseurs à base d'étain. Ces catalyseurs peuvent avantageusement avoir une ou plusieurs des propriétés suivantes :

- être équivalents ou plus performants d'un point de vue cinétique que les catalyseurs à base d'étain ;
- permettre un durcissement des élastomères équivalent ou meilleur que celui obtenu avec des catalyseurs à base d'étain ;
- conduire à des matériaux translucides, ne jaunissant pas au cours du temps ;
- conserver ses performances en l'absence ou en présence de promoteur d'adhérence.

## BREVE DESCRIPTION DE L'INVENTION

Les inventeurs ont découvert que ces objectifs pouvaient être atteints en utilisant des complexes hétérométalliques comme catalyseurs de la réaction de condensation de polyorganosiloxanes ayant des groupements condensables ou hydrolysables et condensables.

Selon un premier aspect, l'invention a pour objet une composition durcissable en présence d'eau ou d'humidité de l'air comprenant :

(A) au moins un polyorganosiloxane **A** ayant un ou plusieurs groupement(s) condensable(s) ou hydrolysable(s) et condensable(s), et

(B) au moins un composé **C,** capable de catalyser la réaction de condensation des groupements condensables ou hydrolysables et condensables du polyorganosiloxane **A,** et qui est un complexe hétérométallique dont la formule chimique comprend :

- au moins deux atomes métalliques M et M' différents, M étant un atome choisi dans le groupe constitué par les atomes des colonnes 2 et 13 du tableau périodique des éléments et M' étant un atome choisi dans le groupe

constitué par les atomes de la colonne 4 du tableau périodique des éléments, et

- au moins un ligand alcoxyde ou chélatant.

Selon un autre aspect, l'invention concerne l'utilisation d'un composé **C** tel que défini ci-dessus et dans la présente description, comme catalyseur d'une réaction de condensation d'un polyorganosiloxane ayant un ou plusieurs groupement(s) condensable(s) ou hydrolysable(s) et condensable(s).

En particulier, l'invention concerne aussi l'utilisation d'un complexe hétérométallique selon l'invention et tel que décrit dans la présente description comme catalyseur de polycondensation de polyorganosiloxane apte à durcir par réaction de polycondensation en un élastomère silicone.

Par ailleurs, est également un objet de la présente invention un complexe chélaté hétérométallique tel que revendiqué dont la formule chimique comprend :

- au moins deux atomes métalliques différents M et M', M étant un atome choisi dans le groupe constitué par les atomes des colonnes 2 et 13 du tableau périodique des éléments et M'étant un atome choisi dans le groupe constitué par les atomes de la colonne 4 du tableau périodique des éléments, et

au moins un ligand chélatant de formule générale (I) :

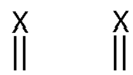

dans laquelle :

- chaque X représente indépendamment l'un de l'autre un atome d'oxygène ou un groupe NR', R' représentant un groupe alkyle en $C_1$ à $C_8$, éventuellement substitué une ou plusieurs fois par un atome d'halogène et/ou par un groupe aryle ;
- $R^1$ et $R^2$, indépendamment l'un de l'autre, représentent :
    - un groupe alkyle ou cycloalkyle en $C_1$ à $C_8$, éventuellement substitué une ou plusieurs fois par un atome d'halogène et/ou par un groupe aryle,
    - un groupe aryle, éventuellement substitué une ou plusieurs fois par un atome d'halogène,
    - un groupe alcoxyde en $C_1$ à $C_8$, éventuellement substitué une ou plusieurs fois par un atome d'halogène et/ou par un groupe aryle,
    - -OH,
    - -NR"$_2$, chaque R" représentant indépendamment l'un de l'autre un atome d'hydrogène ou un groupe alkyle en $C_1$ à $C_8$, éventuellement substitué une ou plusieurs fois par un atome d'halogène et/ou par un groupe aryle ;
- $R^3$ représente un groupe monovalent, de préférence un atome d'hydrogène ou un groupe alkyle en $C_1$ à $C_4$.

## DESCRIPTION DETAILLEE DE L'INVENTION

Il est entendu que, dans le contexte de cette description, le terme « compris entre » doit être interprété comme incluant les bornes indiquées.

La composition selon l'invention est une composition durcissable (également dite « vulcanisable ») en présence d'eau ou d'humidité de l'air, couramment appelée silicone RTV. Elle comprend de façon classique :

- au moins un polyorganosiloxane **A** ayant un ou plusieurs groupement(s) condensable(s) ou hydrolysable(s) et condensable(s), et
- au moins un composé **C** selon l'invention capable de catalyser la réaction de condensation des groupements condensables ou hydrolysables et condensables du polyorganosiloxane **A.**

Ladite composition est durcissable en présence d'eau ou d'humidité de l'air de préférence à température ambiante. Par « température ambiante », on entend de préférence environ 20°C.

Ledit composé C est un complexe hétérométallique dont la formule chimique comprend :

- au moins deux atomes métalliques M et M' différents, M étant un atome choisi dans le groupe constitué par les atomes des colonnes 2 et 13 du tableau périodique des éléments et M' étant un atome choisi dans le groupe

constitué par les atomes de la colonne 4 du tableau périodique des éléments, et

- au moins un ligand alcoxyde ou chélatant.

Dans la présente invention, les atomes des colonnes 2 et 13 du tableau périodique des éléments sont le béryllium (Be), le magnésium (Mg), le calcium (Ca), le strontium (Sr), le baryum (Ba), le radium (Ra), le bore (B), l'aluminium (Al), le gallium (Ga), l'indium (In) et le thallium (Tl). De préférence, M est un atome de magnésium ou d'aluminium. Les atomes de la colonne 4 du tableau périodique des éléments sont le titane (Ti), le zirconium (Zr), l'hafnium (Hf) et le rutherfordium (Rf). De préférence, M' est un atome de titane ou de zirconium.

L'expression « complexe hétérométallique » désigne dans la présente invention un complexe polynucléaire dont la formule chimique comprend au moins deux atomes métalliques différents.

Selon un mode de réalisation préféré, le composé C est un complexe hétérométallique dont la formule chimique comprend :

- au moins deux atomes métalliques M et M' différents, M étant un atome de magnésium (Mg) ou d'aluminium (Al), et de préférence un atome d'aluminium (Al), et M'étant un atome de titane (Ti) ou de zirconium (Zr), et
- au moins un ligand alcoxyde ou chélatant.

Il peut donc être choisi de préférence dans le groupe constitué par les complexes hétérométalliques dont la formule chimique comprend au moins un ligand alcoxyde ou chélatant et au moins deux atomes métalliques M et M' différents choisis parmi les couples suivants :

- M est un atome de magnésium (Mg) et M' est un atome de titane (Ti),
- M est un atome de magnésium (Mg) et M' est un atome de zirconium (Zr),
- M est un atome d'aluminium (Al) et M' est un atome de titane (Ti), ou
- M est un atome d'aluminium (Al) et M' est un atome de zirconium (Zr).

Il est choisi de manière encore plus préférentielle dans le groupe constitué par les complexes hétérométalliques dont la formule chimique comprend au moins un ligand alcoxyde ou chélatant et au moins deux atomes métalliques M et M' différents choisis parmi les couples suivants :

- M est un atome d'aluminium (Al) et M' est un atome de titane (Ti), ou
- M est un atome d'aluminium (Al) et M' est un atome de zirconium (Zr).

De façon encore plus préférée, le composé **C** selon l'invention est choisi dans le groupe constitué par les complexes hétérométalliques dont la formule chimique comprend au moins un ligand alcoxyde ou chélatant et au moins deux atomes métalliques M et M', M étant un atome d'aluminium (Al) et M' est un atome de zirconium (Zr).

Le rapport molaire du métal M sur le métal M' peut être compris entre 0,1 et 10, et de façon préférée entre 0,25 et 4.

Selon un mode de réalisation très préféré, le composé **C** selon l'invention est choisi dans le groupe constitué par :

- les complexes hétérométalliques dont la formule chimique comprend au moins un ligand alcoxyde ou chélatant et au moins deux atomes métalliques M et M' différents, M étant un atome d'aluminium et M' étant un atome de zirconium et dans lesquels le rapport molaire Al/Zr vaut 1 ;
- les complexes hétérométalliques dont la formule chimique comprend au moins un ligand alcoxyde ou chélatant et au moins deux atomes métalliques M et M' différents, M étant un atome d'aluminium et M' étant un atome de zirconium et dans lesquels le rapport molaire Al/Zr vaut 2 ;
- les complexes hétérométalliques dont la formule chimique comprend au moins un ligand alcoxyde ou chélatant et au moins deux atomes métalliques M et M' différents, M étant un atome d'aluminium et M' étant un atome de titane et dans lesquels le rapport molaire Al/Ti vaut 1 ;
- les complexes hétérométalliques dont la formule chimique comprend au moins un ligand alcoxyde ou chélatant et au moins deux atomes métalliques M et M' différents, M étant un atome d'aluminium et M' étant un atome de titane et dans lesquels le rapport molaire Al/Ti vaut 2 ;
- les complexes hétérométalliques dont la formule chimique comprend au moins un ligand alcoxyde ou chélatant et au moins deux atomes métalliques M et M' différents, M étant un atome de magnésium et M' étant un atome de zirconium et dans lesquels le rapport molaire Mg/Zr vaut 1 ;
- les complexes hétérométalliques dont la formule chimique comprend au moins un ligand alcoxyde ou chélatant et au moins deux atomes métalliques M et M' différents, M étant un atome de magnésium et M' étant un atome de titane et dans lesquels le rapport molaire Mg/Ti vaut 1.

Selon un mode de réalisation encore plus préféré, le composé **C** est choisi dans le groupe constitué par :

- les complexes hétérométalliques dont la formule chimique comprend :
    - au moins deux atomes métalliques M et M' différents, M étant l'aluminium et M' étant le zirconium et dans lesquels le rapport molaire Al/Zr = 0,5, 1 ou 2 ; et
    - au moins un ligand alcoxyde ou chélatant ; et
- les complexes hétérométalliques dont la formule chimique comprend :
    - au moins deux atomes métalliques M et M' différents, M étant l'aluminium et M' étant le titane et dans lesquels le rapport molaire Al/Ti = 1 ou 2, et
    - au moins un ligand alcoxyde ou chélatant.

Un ou plusieurs ligands viennent complexer les atomes métalliques. Le complexe hétérométallique selon l'invention comprend au moins un ligand choisi parmi un ligand alcoxyde ou un ligand chélatant.

L'expression « ligand alcoxyde » désigne un ligand de formule chimique OR, R représentant un groupe alkyle en $C_1$ à $C_{24}$. De préférence, le ligand alcoxyde est un ligand de formule chimique OR, R représentant un groupe alkyle en $C_2$ à $C_{12}$, et de façon plus préférée, R est choisi dans le groupe constitué par l'éthyle, l'isopropyle, le n-propyle, le n-butyle, le sec-butyle, le tert-butyle, l'isobutyle, le 2-éthyl-hexyle et le 2-butyl-octyle.

L'expression « ligand chélatant » désigne un ligand lié au moins deux fois à un ou plusieurs atomes métalliques. Le ligand chélatant peut être choisi parmi les ligands chélatants bidentates, tridentates ou tétradentates, de façon préférée bidentate. Un grand nombre de ligands chélatants sont connus par l'homme du métier.

Dans ce qui suit, les ligands chélatants sont décrits sous leur forme libre et neutre. Lorsqu'ils sont associés à un élément central dans un complexe, il est possible que ces ligands chélatants aient perdu un proton ou se présentent sous une forme tautomérique.

De façon préférée, le ligand chélatant est un ligand de formule générale (I) :

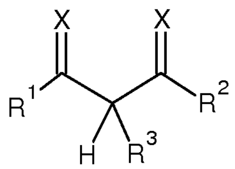

(I)

dans laquelle :

- chaque X représente indépendamment l'un de l'autre un atome d'oxygène ou un groupe NR', R' représentant un groupe alkyle en $C_1$ à $C_8$, éventuellement substitué une ou plusieurs fois par un atome d'halogène et/ou par un groupe aryle ;
- $R^1$ et $R^2$, indépendamment l'un de l'autre, représentent :
    - un groupe alkyle ou cycloalkyle en $C_1$ à $C_8$, éventuellement substitué une ou plusieurs fois par un atome d'halogène et/ou par un groupe aryle,
    - un groupe aryle, éventuellement substitué une ou plusieurs fois par un atome d'halogène,
    - un groupe alcoxyde en $C_1$ à $C_8$, éventuellement substitué une ou plusieurs fois par un atome d'halogène et/ou par un groupe aryle,
    - -OH,
    - $-NR''_2$, chaque R" représentant indépendamment l'un de l'autre un atome d'hydrogène ou un groupe alkyle en $C_1$ à $C_8$, éventuellement substitué une ou plusieurs fois par un atome d'halogène et/ou par un groupe aryle ;
- $R^3$ représente un groupe monovalent, de préférence un atome d'hydrogène ou un groupe alkyle en $C_1$ à $C_4$.

De préférence, le ligand chélatant est choisi dans le groupe constitué par un ligand de type β-céto-ester, un ligand de type β-diester, un ligand de type β-dicétone, un ligand de type β-diacide, un ligand de type β-cétoamide et un ligand de type β-diimide.

De façon encore plus préférée, le ligand chélatant est choisi dans le groupe constitué par l'acétoacétate d'éthyle, l'éthyl acétate d'éthyle, le propionyl acétate d'éthyle, le 2-éthyl acétoacétate d'éthyle, le trifluoro acétoacétate d'éthyle,

le t-butyl acétatoacétate d'éthyle, le cyclopropyl acétoacétate d'éthyle, l'acétoacétonate de propyle, l'acétocétone, l'hexafluoroacetylacetone, le 4,4,4-trifluoro-1-phenyl-1,3-butanedione, le 1,3-diphenyl-1,3-propanedione, le 2,2,6,6-tetramethyl-3,5-heptanedione, le diisopropylmalonate, l'acétoacétamide, le bis-N,N'-(2-phenylethyl)-2,4-diiminopentane, l'acrylate de méthyle, le 1,8-diazabicyclo(5.4.0)undéc-7-ène et le pivaloyl acétate de méthyle.

Le complexe hétérométallique peut comprendre un seul ligand ou plusieurs ligands. Le nombre et la nature des ligands est adapté au nombre de coordination des atomes métalliques. Lorsque le complexe hétérométallique ne comprend qu'un seul ligand, celui-ci est choisi parmi un ligand alcoxyde et un ligand chélatant tels que définis ci-dessus. Lorsque le complexe hétérométallique comprend plusieurs ligands, ceux-ci peuvent être identiques ou différents. Il peut s'agir par exemple de plusieurs ligands alcoxydes identiques ou différents, de plusieurs ligands chélatants identiques ou différents, ou d'un mélange de ligand(s) alcoxyde(s) et de ligand(s) chélatant(s).

En outre, d'autres types de ligands peuvent être présents.

Tout particulièrement, le complexe hétérométallique peut comprendre un ou plusieurs ligands oxo (O), un ou plusieurs ligands hydroxyle (OH) et/ou un ou plusieurs ligands alcool. Ces ligands sont susceptibles d'être présents notamment en raison des phénomènes d'oligomérisation et d'hydrolyse des complexes métalliques à ligands alcoxydes. L'expression « ligand alcool » désigne un ligand de formule chimique (alkyle en $C_1$ à $C_{24}$)-OH.

Par ailleurs, le complexe hétérométallique peut comprendre d'autres ligands neutres. L'expression « ligand neutre » désigne dans la présente invention un ligand qui coordonne le métal en apportant à celui-ci une paire d'électrons. L'homme du métier utilisera tout type de ligand neutre adapté au métal concerné. Le ligand neutre peut être choisi parmi les ligands neutres porteurs d'au moins une paire d'électrons libres tels que les amines, les phosphines, les éthers et l'eau, les ligands se coordonnant par l'intermédiaire d'une ou de plusieurs liaisons $\pi$ tels que l'éthylène, et les ligands se coordonnant par l'intermédiaire d'une liaison $\sigma$ tel que $H_2$. De préférence, le complexe hétérométallique selon l'invention ne comprend pas d'autre ligand neutre.

Le composé **C** selon l'invention peut être un complexe hétérométallique de formule générale (II) :

$$[M_mM'_n(Lig1)_x(Lig2)_y(Lig3)_z] \qquad (II)$$

dans laquelle :

- le symbole M représente un atome de magnésium Mg ou d'aluminium Al ;
- le symbole M' représente un atome de titane Ti ou de zirconium Zr ;
- le symbole Lig1 représente un ligand alcoxyde ;
- le symbole Lig2 représente un ligand chélatant ;
- le symbole Lig3 représente un ligand choisi dans le groupe constitué par : un ligand oxo, un ligand hydroxyde, un ligand alcool et un ligand neutre ; et
- m, n, x, y et z sont des nombres tels que $m > 0$, $n > 0$, $x \geq 0$, $y \geq 0$, $z \geq 0$ et $(x+y) > 0$.

Dans la notation ci-dessus, les nombres m, n, x, y et z peuvent être des nombres entiers ou non. Lorsqu'il s'agit de nombres non entiers, l'homme du métier comprendra que la formule (II) est une formule générale basée sur la composition du complexe et sur les rapports molaires entre les différents atomes ou groupements atomiques. De plus, il est entendu dans cette formule que si x est différent de zéro, alors un ou plusieurs ligands Lig1 identiques ou différents entre eux peuvent être présents, si y est différent de zéro, alors un ou plusieurs ligands Lig2 identiques ou différents entre eux peuvent être présents, et si z est différents de zéro, alors un ou plusieurs ligands Lig3 identiques ou différents entre eux peuvent être présents.

Les nombres m et n peuvent indépendamment être choisis entre 0 et 20, zéro étant exclu, et le rapport m/n peut être compris entre 0,1 et 10. De préférence, m et n peuvent être indépendamment être égal à 1, 2, 3 ou 4. En outre, le rapport m/n est de préférence compris entre 0,25 et 4.

Le composé C selon l'invention peut notamment être choisi dans le groupe constitué par les complexes hétérométalliques de formules (IIa) à (IIf) :

$$[AlZr(Lig1)_x(Lig2)_y(Lig3)_z] \qquad (IIa)$$

$$[Al_2Zr(Lig1)_x(Lig2)_y(Lig3)_z] \qquad (IIb)$$

$$[AlTi(Lig1)_x(Lig2)_y(Lig3)_z] \qquad (IIc)$$

$$[Al_2Ti(Lig1)_x(Lig2)_y(Lig3)_z] \qquad (IId)$$

$$[MgZr(Lig1)_x(Lig2)_y(Lig3)_z] \qquad (IIe)$$

$$[MgTi(Lig1)_x(Lig2)_y(Lig3)_z] \qquad (IIf)$$

dans lesquelles Lig1, Lig2, Lig3, x, y et z sont tels que définis ci-dessus.

Le complexe hétérométallique selon l'invention comprend au moins un ligand alcoxyde Lig1 ou un ligand chélatant Lig2. Dans la formule générale (II), x, y et z sont des nombres tels que $x \geq 0$, $y \geq 0$, $z \geq 0$ et $(x+y) > 0$. x et y ne peuvent donc pas être égaux à zéro en même temps. x peut être compris de façon préférée entre 0 et 20, et de façon plus préférée entre 0,1 et 12. y peut être compris de façon préférée entre 0 et 20, et de façon plus préférée entre 2 et 10. z peut être compris de façon préférée entre 0 et 2. Lig1 est un ligand alcoxyde de préférence tel que décrit ci-dessus, Lig2 est un ligand chélatant de préférence tel que décrit ci-dessus et Lig3 est un ligand neutre de préférence tel que décrit ci-dessus.

Deux modes de réalisation particulièrement préférés sont présentés ci-dessous.

Selon un premier mode de réalisation particulièrement préféré de la présente invention, le composé C est un complexe alcoxyde hétérométallique dont la formule chimique comprend au moins deux atomes métalliques différents M et M', M étant un atome de magnésium ou d'aluminium et M' étant un atome de titane ou de zirconium. Ce complexe comprend au moins un ligand alcoxyde tel que défini ci-dessus.

Les ligands de ce complexe peuvent être uniquement des alcoxydes, identiques ou différents entre eux, éventuellement en mélange avec un ou plusieurs ligands choisis dans le groupe constitué par un ligand oxo, un ligand hydroxyde et un ligand alcool.

Le composé C selon ce mode de réalisation peut être un complexe hétérométallique de formule générale (II) dans laquelle « y » vaut zéro et « x » est différent de zéro. Il s'agit de préférence complexe alcoxyde hétérométallique de formule générale (III) :

$$[M_mM'_n(Lig1)_x(Lig3)_z] \qquad (III)$$

dans laquelle :

- le symbole M représente un atome de magnésium Mg ou d'aluminium Al ;
- le symbole M' représente un atome de titane Ti ou de zirconium Zr ;
- le symbole Lig1 représente un ligand alcoxyde ;
- le symbole Lig3 représente un ligand choisi dans le groupe constitué par un ligand oxo, un ligand hydroxyde et un ligand alcool ;
- m, n, x, y et z sont des nombres tels que $m > 0$, $n > 0$, $x > 0$ et $z \geq 0$.

En particulier, le composé C est un complexe alcoxyde hétérométallique dont la formule chimique comprend :

- au moins deux atomes métalliques M et M' différents, M étant le magnésium ou l'aluminium et M'étant le titane ou le zirconium, et
- au moins un ligand alcoxyde ;

et de préférence ledit complexe alcoxyde hétérométallique est choisi dans le groupe constitué par :

- les complexes alcoxydes hétérométalliques dont la formule chimique comprend :
  - au moins deux atomes métalliques M et M' différents, M étant l'aluminium et M'étant le zirconium,
  - au moins un ligand alcoxyde de formule chimique O-(alkyle linéaire ou ramifié en $C_3$ à $C_{12}$), et
  - dans lesquels le rapport molaire Al/Zr vaut 0,5, 1 ou 2;
- les complexes alcoxydes hétérométalliques dont la formule chimique comprend :
  - au moins deux atomes métalliques M et M' différents, M étant le magnésium et M'étant le zirconium,
  - au moins un ligand alcoxyde de formule chimique O-(alkyle linéaire ou ramifié en $C_2$ à $C_{12}$), et
  - dans lesquels le rapport molaire Mg/Zr vaut 0,5, 1, 2, 3 ou 4 ; et
- les complexes alcoxydes hétérométalliques dont la formule chimique comprend :
  - au moins deux atomes métalliques M et M' différents, M étant l'aluminium et M' étant le titane,
  - au moins un ligand alcoxyde de formule chimique O-(alkyle linéaire ou ramifié en $C_3$ à $C_{12}$), et

- dans lesquels le rapport molaire Al/Ti vaut 1 ou 2 ;

et de façon encore plus préférée ledit complexe alcoxyde hétérométallique est choisi dans le groupe constitué par $AlZr(OBu)_4(OsBu)_3$, $Al_2Zr(OnBu)_4(OsBu)_6$, $AlZr_2(OnBu)_{11}$, $AlTi(OsBu)_3(OnBu)_4$ et $Al_2Ti(OnBu)_{10}$.

Certains complexes alcoxydes hétérométalliques selon ce mode de réalisation sont disponibles dans le commerce. Par exemple, la société Gelest fournit des complexes alcoxydes hétérométalliques aluminium-titane, aluminium-zirconium et magnésium-zirconium.

De plus, les complexes alcoxydes hétérométalliques selon ce mode de réalisation peuvent être préparés à partir des alcoxydes monométalliques correspondants. Une voie possible de synthèse consiste à faire réagir ensemble les alcoxydes monométalliques sous agitation, de préférence sans solvant et de préférence à température ambiante, pendant une durée suffisante pour que la réaction d'association ait lieu. Généralement, cette réaction est exothermique.

Les complexes alcoxydes hétérométalliques désirés peuvent être obtenus de façon classique par échange de ligands. L'échange de ligands alcoxydes peut classiquement être réalisé par réaction d'un premier complexe avec l'alcool correspondant au ligand alcoxyde désiré, cet alcool étant moins volatil que l'alcool correspondant au ligand du premier complexe, éventuellement dans un solvant appropriée, avec chauffage et de préférence sous pression réduite.

Selon un second mode de réalisation particulièrement préféré de la présente invention, le composé C est un complexe chélaté hétérométallique dont la formule chimique comprend au moins deux atomes métalliques différents M et M', M étant un atome de magnésium ou d'aluminium et M' étant un atome de titane ou de zirconium. Ce complexe comprend au moins un ligand chélatant tel que défini ci-dessus.

Les ligands de ce complexe peuvent être uniquement des chélates, identiques ou différents entre eux, ou bien un ou plusieurs chélates en mélange avec un ou plusieurs ligands choisis dans le groupe constitué par un ligand alcoxyde, un ligand oxo, un ligand hydroxyde et un ligand alcool.

Le composé C selon ce mode de réalisation peut être un complexe hétérométallique de formule générale (II) dans laquelle « y » est différent de zéro. Il s'agit de préférence d'un complexe chélaté hétérométallique de formule générale (IV) :

$$[M_mM'_n(Lig1)_x(Lig2)_y(Lig3)_z] \qquad (IV)$$

dans laquelle :

- le symbole M représente un atome de magnésium Mg ou d'aluminium Al ;
- le symbole M' représente un atome de titane Ti ou de zirconium Zr ;
- le symbole Lig1 représente un ligand alcoxyde ;
- le symbole Lig2 représente un ligand chélatant ;
- le symbole Lig3 représente un ligand choisi dans le groupe constitué par un ligand oxo, un ligand hydroxyde et un ligand alcool ;
- m, n, x, y et z sont des nombres tels que $m > 0$, $n > 0$, $x \geq 0$, $y > 0$ et $z \geq 0$.

En particulier, le composé **C** est un complexe chélaté hétérométallique dont la formule chimique comprend :

- au moins deux atomes métalliques différents M et M', M étant le magnésium ou l'aluminium et M' étant le titane ou le zirconium, et
- au moins un ligand chélate ;

ledit complexe chélaté hétérométallique étant choisi de préférence dans le groupe constitué par :

- les complexes chélatés hétérométalliques dont la formule chimique comprend :
  - au moins deux atomes métalliques différents M et M', M étant l'aluminium et M' étant le zirconium,
  - au moins un ligand chélatant, de préférence choisi dans le groupe constitué par l'acétoacétate d'éthyle, l'acétoacétate de propyle et le malonate de diisopropyle,
  - éventuellement au moins un ligand alcoxyde de formule chimique O-(alkyle linéaire ou ramifié en $C_3$ ou $C_4$), et
  - ayant un rapport molaire Al/Zr = 1 ou 2 ;

- les complexes chélatés hétérométalliques dont la formule chimique comprend :
  - au moins deux atomes métalliques différents M et M', M étant l'aluminium et M' étant le zirconium,
  - au moins un ligand chélatant, de préférence choisi dans le groupe constitué par l'acétoacétate d'éthyle, l'acétoacétate de propyle et le malonate de diisopropyle,
  - ayant un rapport molaire Al/Zr = 1 ou 2, et
  - ne comprenant pas de ligand alcoxyde ;

- les complexes chélatés hétérométalliques dont la formule chimique comprend :

  - au moins deux atomes métalliques différents M et M', M étant le magnésium et M' étant le zirconium,
  - au moins un ligand chélatant, de préférence l'acétoacétate d'éthyle, et
  - ayant un rapport molaire Mg/Zr = 1 ;

- les complexes chélatés hétérométalliques dont la formule chimique comprend :

  - au moins deux atomes métalliques différents M et M', M étant l'aluminium et M' étant le titane,
  - au moins un ligand chélatant, de préférence choisi dans le groupe constitué par l'acétoacétate d'éthyle et l'acétoacétate de propyle,
  - éventuellement au moins un ligand alcoxyde de formule chimique O-(alkyle linéaire ou ramifié en $C_3$ ou $C_4$), et
  - ayant un rapport molaire Al/Ti = 1 ; et

- les complexes chélatés hétérométalliques dont la formule chimique comprend :

  - au moins deux atomes métalliques différents M et M', M étant le magnésium et M' étant le titane,
  - au moins un ligand chélatant, de préférence l'acétoacétate d'éthyle,
  - éventuellement au moins un ligand alcoxyde de formule chimique O-(alkyle linéaire ou ramifié en $C_3$), et
  - ayant un rapport molaire Mg/Ti = 1 ;

et de façon encore plus préféré ledit complexe chélaté hétérométallique étant choisi dans le groupe constitué par $AlZr(EAA)_3(OnPr)_4$, $Al_2Zr(EAA)_6(OnPr)_4$, $AlZr(EAA)_7$, $Al_2Zr(EAA)_{10}$ et $AlTi(EAA)_3(OnBu)_4$.

Certains complexes chélatés monométalliques sont disponibles dans le commerce. Par exemple, la société DuPont propose des complexes chélatés de titane ou de zirconium sous le nom Tyzor®.

D'autres complexes chélatés monométalliques possédant les ligands désirés peuvent être obtenus de façon classique par échange de ligands. L'échange de ligands peut classiquement être réalisé par réaction d'un premier complexe avec le précurseur correspondant au ligand désiré, éventuellement dans un solvant appropriée, avec chauffage et de préférence sous pression réduite.

La synthèse des complexes chélatés hétérométalliques peut être réalisée selon trois méthodes :

- Par une réaction d'acide-base de Lewis en mettant en contact un ou plusieurs complexes alcoxydes et/ou chélates monométalliques, de préférence à température ambiante et sans solvant, pendant une durée suffisante pour que la réaction d'association ait lieu, par exemple selon le schéma réactionnel suivant :

$$n\ M(Lig1)_x(Lig2)_y(Lig3)_z + m\ M'(Lig1')_{x'} \rightarrow M_nM'_m(Lig1)_x(Lig1')_{x'}Lig2)_y(Lig3)_z$$

  dans lequel M, M', Lig1, Lig2, Lig3, n, m, x, y et z ont les significations données ci-avant, LigI' représente au ligand alcoxyde identique ou différent de LigI, x' est un nombre tel que x' > 0 ;

- Par substitution d'un ou plusieurs ligands alcoxydes sur un complexe alcoxyde hétérométallique par un ligand chélate, par exemple selon le schéma réactionnel suivant :

$$M_nM'_m(Lig1)_x(Lig3)_z + y\ Lig2 \rightarrow M_nM'_m(Lig1)_{x-y}(Lig2)_y(Lig3)_z + y\ Lig1$$

  dans lequel M, M', Lig1, Lig2, Lig3, n, m, x, y et z ont les significations données ci-avant ;

- Par synthèse en deux étapes :

  a) synthèse d'un complexe chélaté monométallique à partir d'un complexe alcoxyde monométallique par échange de ligands avec un chélate, par exemple selon le schéma réactionnel suivant :

$$M_n(Lig1)_x(Lig3)_z + y\ Lig2 \rightarrow M_n(Lig1)_{x-y}(Lig2)_y(Lig3)_z + y\ Lig1$$

b) puis association du complexe chélaté monométallique avec un complexe alcoxyde monométallique à base d'un métal différent, par exemple selon le schéma réactionnel suivant :

$$M_n(Lig1)_x(Lig2)_y(Lig3)_z + m\ M'(Lig1')_{x'} \rightarrow M_nM'm(Lig1)_x(Lig1')_{x'}Lig2)_y(Lig3)_z$$

Cette voie de synthèse en deux étapes peut avantageusement être monotope (« one-pot »), sans isolement des produits intermédiaires.

C'est pourquoi la présente invention a également pour objet un complexe chélaté hétérométallique selon la présente revendication 14 comprenant :

- au moins deux atomes métalliques différents M et M', M étant un atome de magnésium ou d'aluminium et M' étant un atome de titane ou de zirconium, et
- au moins un ligand chélate.

Les inventeurs ont découvert que, de façon tout à fait inattendue, les complexes hétérométalliques selon l'invention étaient de meilleurs catalyseurs de la réaction de condensation des groupements condensables ou hydrolysables et condensables d'un polyorganosiloxane, et en particulier de la réaction de polycondensation des silicones, que le simple mélange des complexes monométalliques correspondants.

Le composé **C** en tant que catalyseur est présent dans la composition durcissable en présence d'eau ou d'humidité de l'air selon l'invention en quantité catalytique. La concentration en catalyseur dans la composition selon l'invention peut être comprise entre 0,1% et 6%, de préférence entre 1% et 3%, en poids, par rapport au poids total de la composition.

De préférence, le polyorganosiloxane **A** selon l'invention est porteur d'au moins deux groupements choisis dans le groupe constitué par les groupements hydroxy, alcoxy, alcoxy-alkylène-oxy, amino, amido, acylamino, aminoxy, iminoxy, cétiminoxy, acyloxy et énoxy.

Selon un mode de réalisation préféré, le polyorganosiloxane **A** comprend :

(i) au moins deux motifs siloxyles de formule (V) suivante :

$$R_a^4\, Z_b\, SiO_{\frac{4-(a+b)}{2}} \qquad \text{(V)}$$

dans laquelle :

- les symboles $R^4$, identiques ou différents, représentent des radicaux hydrocarbonés monovalents en $C_1$ à $C_{30}$,
- les symboles Z, identiques ou différents, représentent chacun un groupement hydrolysable et condensable ou un groupement hydroxy, et de préférence sont choisis dans le groupe constitué par les groupements hydroxy, alcoxy, alcoxy-alkylène-oxy, amino, amido, acylamino, aminoxy, iminoxy, cétiminoxy, acyloxy, iminoxy, cétiminoxy et énoxy,
- a est égal à 0, 1 ou 2, b est égal à 1, 2 ou 3, la somme a + b est égale à 1, 2 ou 3, et

(ii) éventuellement un ou plusieurs motif(s) siloxyle(s) de formule (VI) suivante :

$$R_c^5\, SiO_{\frac{4-c}{2}} \qquad \text{(VI)}$$

dans laquelle :

- les symboles $R^5$, identiques ou différents, représentent des radicaux hydrocarbonés monovalent en $C_1$ à $C_{30}$ éventuellement substitués par un ou plusieurs atomes d'halogène ou par des groupements amino, éther, ester, époxy, mercapto ou cyano, et
- le symbole c est égal à 0, 1, 2 ou 3.

De préférence, le polyorganosiloxane A a pour formule générale (VII) :

$$Z_dR^6_{3-d}Si\text{-}O\text{-}(SiR^6_2\text{-}O)_p\text{-}SiR^6_{3-d}Z_d \qquad (VII)$$

dans laquelle :

- les symboles Z, identiques ou différents, représentent chacun un groupement hydrolysable et condensable ou un groupement hydroxy, et de préférence sont choisis dans le groupe constitué par les groupements hydroxy, alcoxy, alcoxy-alkylène-oxy, amino, amido, acylamino, aminoxy, iminoxy, cétiminoxy, acyloxy et énoxy,
- les symboles $R^6$, identiques ou différents, représentent des radicaux hydrocarbonés monovalent en $C_1$ à $C_{30}$ éventuellement substitués par un ou plusieurs atomes d'halogène ou par des groupements amino, éther, ester, époxy, mercapto ou cyano,
- le symbole d est égal à 1, 2 ou 3, de préférence égal à 2 ou 3, et lorsque Z est un groupe hydroxy alors d = 1,
- lorsque le polyorganosiloxane **A** est une huile silicone, le symbole p est compris entre 1 et 2000, de préférence compris entre 1 et 1000, et lorsque le polyorganosiloxane **A** est une gomme silicone, le symbole p est de préférence supérieur à 2000 et sa valeur est déterminée de manière à ce que la consistance de la gomme soit comprise entre 200 et 2000 selon la ou les norme(s) citée(s) dans la présente description.

Dans les formules (V), (VI) et (VII), les symboles $R^4$, $R^5$ et $R^6$ sont de préférence :

- des radicaux alkyles ayant de 1 à 20 atomes de carbone, éventuellement substitués par un ou plusieurs groupes aryles ou cycloalkyles, par un ou plusieurs atomes d'halogène ou par des groupements amino, éther, ester, époxy, mercapto, cyano ou (poly)glycol. On peut citer par exemple les radicaux méthyle, éthyle, propyle, isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle ;
- des radicaux cycloalkyles et halogénocycloalkyles ayant de 5 à 13 atomes de carbone tels que les radicaux cyclopentyle, cyclohexyle, méthylcyclohexyle, propylcyclohexyle, difluoro-2,3 cyclobutyle, difluoro-3,4 méthyl-5 cycloheptyle ;
- des radicaux aryles et halogénoaryles mononucléaires ayant de 6 à 13 atomes de carbone tels que les radicaux : phényle, tolyle, xylyle, chlorophényle, dichlorophényle, trichlorophényle ; ou
- des radicaux alcényles ayant de 2 à 8 atomes de carbone tels que les radicaux : vinyle, allyle et butène-2 yle.

La viscosité du polyorganosiloxane **A** est généralement comprise entre 50 mPa.s et 1 000 000 mPa.s à 25°C. Lorsqu'il s'agit d'une gomme silicone, la viscosité du polyorganosiloxane **A** est alors supérieure à 1 000 000 mPa.s à 25°C et alors la consistance de la gomme est de préférence comprise entre 200 et 2000.

La détermination de la consistance peut être faite par mesure de la pénétrabilité à l'aide d'un pénétromètre par exemple selon une des normes AFNOR NFT 60 119 ou NFT 60 123. La norme NFT 60 123 est particulièrement adaptée à la présente description.

Dans le cas particulier où le polyorganosiloxane **A** est un polyorganosiloxane de formule générale (VII) avec des symboles Z de type hydroxyle, alors le symbole d sera de préférence égal à 1. Dans ce cas, on préfère utiliser des poly(diméthylsiloxane) ayant des fonctions silanols en positions terminales (dites également positions « alpha-oméga ») et qui sont généralement des huiles dont la viscosité varie par exemple pour une application moulage entre 100 mPa.s à 25°C à 20 000 mPa.s à 25°C. Il est avantageux d'utiliser ceux dont au moins 60% des radicaux $R^4$ et $R^5$ (dans les formules (V) et (VI)) ou du radical $R^6$ (dans la formule (VII)) sont des radicaux méthyles, les autres radicaux étant généralement des radicaux phényles et/ou vinyles.

Selon l'invention, les symboles Z représentent chacun un groupement hydroxy ou un groupement hydrolysable et condensable qui sont de préférence choisis dans le groupe constitué par les groupements alcoxy, alcoxy-alkylène-oxy, amino, amido, acylamino, aminoxy, iminoxy, cétiminoxy, acyloxy et énoxy.

Lorsque le polyorganosiloxane **A** présente des groupements Z hydrolysables et condensables selon l'invention et est un polyorganosiloxane, de préférence un polydiméthylsiloxane avec des groupements Z hydrolysables et condensables, on le décrit le plus souvent comme un polymère fonctionnalisé et il correspond à une forme stable en l'absence d'humidité qui peut être utilisé dans une composition monocomposante et être ainsi conditionnée en cartouches hermétiquement fermées qui seront ouvertes par l'opérateur lors de l'utilisation pour former après durcissement un élastomère durci.

Comme exemple de groupements hydrolysables et condensables Z de type alcoxy, on peut citer les groupes ayant de 1 à 8 atomes de carbone comme les groupes méthoxy, éthoxy, n-propoxy, iso-propoxy, n-butoxy, iso-butoxy, sec-butoxy, tert-butoxy, 2-méthoxyéthoxy, hexyloxy ou octyloxy.

Comme exemple de groupements hydrolysables et condensables Z de type alcoxy-alkylène-oxy, on peut citer le groupement méthoxy-éthylène-oxy.

Comme exemple de groupements hydrolysables et condensables Z de type amino, on peut citer les groupements méthylamino, diméthylamino, éthylamino, diéthylamino, n-butylamino, sec-butylamino ou cyclohexylamino.

Comme exemple de groupements hydrolysables et condensables Z de type amido, on peut citer le groupement N-méthyl-acétamido.

Comme exemple de groupements hydrolysables et condensables Z de type acylamino, on peut citer le groupement benzoyl-amino.

Comme exemple de groupements hydrolysables et condensables Z de type aminoxy, on peut citer les groupements diméthylaminoxy, diéthylaminoxy, dioctylaminoxy ou diphénylaminoxy.

Comme exemple de groupements hydrolysables et condensables Z de type iminoxy et en particulier cétiminoxy, on peut citer les groupements dérivés des oximes suivantes : acétophénone-oxime, acétone-oxime, benzophénone-oxime, méthyl-éthyl-cétoxime, diisopropylcétoxyme ou méthylisobutyl-cétoxime.

Comme exemple de groupements hydrolysables et condensables Z de type acyloxy, on peut citer le groupement acétoxy.

Comme exemple de groupements hydrolysables et condensables Z de type énoxy, on peut citer le groupement 2-propénoxy.

Lorsque le polyorganosiloxane **A** présente des groupements Z de type hydroxyle, on peut alors les fonctionnaliser in-situ dans les compostions monocomposantes, via un catalyseur de fonctionnalisation, de manière à pouvoir les stocker et les conditionner en cartouches hermétiquement fermées. De préférence, le catalyseur de fonctionnalisation est la lithine (ou hydroxyde de lithium) ou la potasse. La lithine se trouve largement dans le commerce. De préférence, elle est utilisée en solution dans un alcool, par exemple du méthanol ou de l'éthanol. La préparation du polyorganosiloxane **A** comprenant des groupements alcoxylés par fonctionnalisation est décrite par exemple dans la demande de brevet français FR 2 638 752.

De préférence, le polyorganosiloxane **A** a pour formule (VIII) :

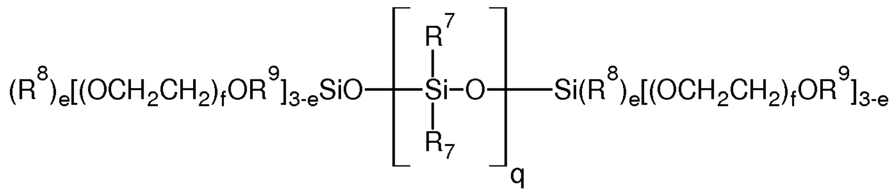

(VIII)

dans laquelle :

- les substituants $R^7$, identiques ou différents, représentent chacun un radical monovalent hydrocarboné saturé ou non en $C_1$ à $C_{13}$, substitué ou non substitué, aliphatique, cyclanique ou aromatique ;
- les substituants $R^8$, identiques ou différents, représentent chacun un radical monovalent hydrocarboné saturé ou non en $C_1$ à $C_{13}$, substitué ou non substitué, aliphatique, cyclanique ou aromatique ;
- les substituants $R^9$, identiques ou différents, représentent chacun un radical alkyle, linéaire ou ramifié, en $C_1$ à $C_6$ ;
- q a une valeur suffisante pour conférer au polyorganosiloxane **A** une viscosité dynamique à 25°C allant de 50 mPa.s à 1 000 000 mPa.s lorsqu'il s'agit d'une huile silicone ou supérieure à 1 000 000 mPa.s lorsqu'il s'agit d'une gomme, et de préférence lorsqu'il s'agit d'une huile silicone, le symbole q est compris entre 1 et 2000, et de préférence compris entre 1 et 1000, et lorsqu'il s'agit d'une gomme silicone, q est de préférence supérieur à 2000 et sa valeur sera déterminée de manière à ce que la consistance de la gomme soit comprise entre 200 et 2000 selon la ou les norme(s) citée(s) dans la présente description ; et
- l'indice e est égal à zéro ou 1 et l'indice f est égal à zéro ou 1.

Selon un autre mode de réalisation préféré, le polyorganosiloxane **A** comprenant au moins un groupement alcoxylé est obtenu en faisant réagir, éventuellement in-situ, en présence d'une quantité catalytiquement efficace d'au moins un catalyseur de fonctionnalisation :

a) au moins un polyorganosiloxane **A'** comprenant des motifs siloxyles de formule (IX) :

$$R_g^{10}\ OH_h\ SiO_{\frac{4-(g+h)}{2}} \qquad \text{(IX)}$$

dans laquelle :

- x+y = 0, 1, 2 ou 3
- les substituants $R^{10}$, identiques ou différents, représentent chacun un radical monovalent hydrocarboné en $C_1$ à $C_{30}$ et choisi de préférence parmi le groupe constitué par les radicaux alkyles, cycloalkyles, aryles, alkaryles et aralkyles, et
- au moins deux motifs siloxyles comprenant un groupement ≡SiOH sont présents dans le polyorganosiloxane **A',** avec

b) au moins un silane polyalcoxylé **H** de formule (X) :

$$(R^{11})_iSi(OR^{12})_{(4-i)} \qquad (X)$$

dans laquelle :

- i = 0 ou 1,
- le symbole $R^{11}$ représente un radical monovalent hydrocarboné en $C_1$ à $C_{13}$, et
- les symboles $R^{12}$, identiques ou différents, représentent chacun un radical monovalent hydrocarboné en $C_1$ à $C_6$ ou un radical alkoxyalkyle présentant éventuellement une fonction ester.

A titre de constituant préféré, le polyorganosiloxane **A** comprend les motifs siloxyles suivants : M = $[(OH)(R^{13})_2SiO_{i/2}]$ et D = $[R^{14}R^{15}SiO_{>2/2}]$ ; formules dans lesquelles $R^{13}$, $R^{14}$ et $R^{15}$ sont des radicaux, identiques ou différents, choisis dans le groupe constitué par les radicaux alkyles linéaires ou ramifiés en $C_1$-$C_6$ (tels que méthyle, éthyle, propyle, isopropyle, butyle, isobutyle, t-butyle, n-pentyle, n-hexyle), les radicaux cycloalkyles en $C_3$-$C_8$ (tels que cyclopentyle, cyclohexyle), les radicaux aryles en $C_6$-$C_{10}$ (tels que phényle, naphtyle) et les radicaux alkylarylènes en $C_6$-$C_{15}$ (tels que tolyles, xylyle).

Le polyorganosiloxane **A** peut-être un polydiorganosiloxane linéaire présentant au moins deux groupements silanols SiOH par molécule et dont la viscosité dynamique à 25°C est comprise entre 50 mPa.s et 50 x $10^6$ mPa.s, de préférence entre 50 mPa.s et $10^6$ mPa.s lorsqu'il s'agit d'huiles silicones, ou supérieure à $10^6$ mPa.s lorsqu'il s'agit de gommes silicones. Toutes les viscosités dont il est question dans la présente description correspondent à une grandeur de viscosité dynamique qui est mesurée, de manière connue en soi, à 25°C. Lorsqu'il s'agit de gommes silicones, on peut choisir celles dont la consistance est comprise entre 200 et 2000.

De préférence, le polyorganosiloxane **A** est choisi dans le groupe constitué par les polyorganosiloxanes de formule (XI) :

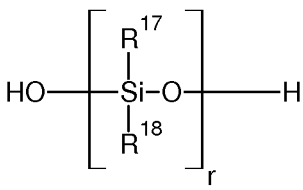

(XI)

dans laquelle :

- r a une valeur suffisante pour conférer au polyorganosiloxane de formule (XI) une viscosité dynamique à 25°C allant de 50 mPa.s à 1 000 000 mPa.s lorsqu'il s'agit d'une huile silicone ou supérieure à 1 000 000 mPa.s lorsqu'il s'agit d'une gomme silicone, et de préférence lorsqu'il s'agit d'une huile silicone le symbole r est compris entre 1 et 2000, et de préférence compris entre 1 et 1000, et lorsqu'il s'agit d'une gomme silicone, r est de préférence supérieur à 2000 et sa valeur sera déterminée de manière à ce que la consistance de la gomme soit comprise entre 200 et 2000 selon la ou les norme(s) citée(s) dans la présente description ;
- $R^{17}$ et $R^{18}$, identiques ou différents, représentent un alkyle ayant de 1 à 6 atomes de carbone, un cycloalkyle ayant de 3 à 8 atomes de carbone, un aryle, un alkylarylène ou un arylalkylène.

Des exemples de polyorganosiloxane **A** les plus utiles, du fait de leur disponibilité industrielle, sont ceux pour lesquels $R^{17}$ et $R^{18}$ sont indépendamment choisis dans le groupe des radicaux constitué par un méthyle, un éthyle, un propyle, un isopropyle, un cyclohexyle, un phényle, et un 3,3,3-trifluoropropyle. De manière très préférée, au moins environ 80 % en nombre de ces radicaux sont des radicaux méthyles.

De manière encore plus préférée, le polyorganosiloxane **A** est le polyorganosiloxane de formule (XII) :

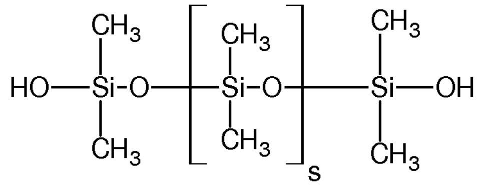

(XII)

avec $1 \leq s \leq 4200$ et de préférence $2 \leq s \leq 1500$.

Les groupes organiques identiques ou différents généralement présents dans la structure du polyorganosiloxane **A** sont les radicaux méthyles, éthyles, phényles ou trifluoropropyles. De préférence, au moins 80 % en nombre desdits groupes organiques sont des groupes méthyles liés directement aux atomes de silicium. Dans le cadre de la présente invention, on préfère plus spécialement les α,ω-bis (diméthylhydroxysilyl) polydiméthylsiloxanes.

Dans le cadre de la présente invention, on peut spécialement utiliser les α,ω-bis (diméthylhydroxysilyl)polydiméthylsiloxanes préparés par le procédé de polymérisation anionique décrit dans les brevets américains US 2 891 920 et US 3 294 725.

Le polyorganosiloxane **A** peut aussi être choisi parmi les résines organosiliciques porteuses d'au moins un groupe hydroxy ou alcoxy, groupements qui sont soit condensables ou hydrolysables, soit condensables, qui comportent au moins deux motifs siloxyles différents choisis parmi ceux de formule M, D, T et Q avec :

- le motif siloxyle M = $(R^0)_3SiO_{1/2}$,
- le motif siloxyle D = $(R^0)_2SiO_{2/2}$,
- le motif siloxyle T = $R^0SiO_{3/2}$, et
- le motif siloxyle Q = $SiO_{4/2}$ ;

formules dans lesquelles $R^0$ représente un groupement monovalent hydrocarboné ayant de 1 à 40 atomes de carbone, et de préférence de 1 à 20 atomes de carbones, ou un groupe -OR"' avec R"'= H ou un radical alkyle ayant de 1 à 40 atomes de carbone, et de préférence de 1 à 20 atomes de carbones ;
avec la condition que les résines comprennent au moins un motif T ou Q.

Ladite résine a de préférence une teneur pondérale en substituants hydroxy ou alcoxy comprise entre 0,1 et 10% en poids par rapport au poids de la résine, et de préférence une teneur pondérale en substituants hydroxy ou alcoxy comprise entre 0,2 et 5% en poids par rapport au poids de la résine.

Les résines organosiliciques possèdent en général environ de 0,001 à 1,5 groupe OH et/ou alkoxyle par atome de silicium. Ces résines organosiliciques sont généralement préparées par co-hydrolyse et co-condensation de chlorosilanes tels que ceux de formules $(R^{19})_3SiCl$, $(R^{19})_2Si(Cl)_2$, $R^{19}Si(Cl)_3$ ou $Si(Cl)_4$, les radicaux $R^{19}$ étant identiques ou différents et généralement choisis parmi les radicaux alkyles linéaires ou ramifiés en $C_1$ à $C_6$, phényle et trifluoro-3,3,3 propyle. On peut citer comme exemple de radicaux $R^{19}$ de type alkyle, notamment un méthyle, un éthyle, un isopropyle, un tertiobutyle et un n-hexyle.

Comme exemple de résine on peut citer les résines siliciques de type T(OH), $DT^{(OH)}$, $DQ^{(OH)}$, $DT^{(OH)}$, $MQ^{(OH)}$, $MDT^{(OH)}$, $MDQ^{(OH)}$ ou les mélanges de celles-ci.

La composition selon l'invention peut contenir en outre un agent de réticulation **B.** L'agent de réticulation est de préférence un composé organosilicié portant par molécule plus de deux groupes hydrolysables liés aux atomes de silicium. De tels agents de réticulation sont bien connus de l'homme du métier et sont disponibles dans le commerce.

L'agent de réticulation **B** est de préférence un composé de silicium dont chaque molécule comprend au moins trois groupements hydrolysables et condensables Y, ledit agent de réticulation **B** ayant la formule (XIII) suivante :

$$R^{20}_{(4-j)}SiY_j \qquad (XIII)$$

dans laquelle :

- le symbole $R^{20}$ est un radical hydrocarboné monovalent comprenant de 1 à 30 atomes de carbone,
- les symboles Y, identiques ou différents, sont choisis dans le groupe constitué par les groupements alcoxy, alcoxy-alkylène-oxy, amino, amido, acylamino, aminoxy, iminoxy, cétiminoxy, acyloxy ou énoxy, et de préférence Y est un groupement alcoxy, acyloxy, énoxy, cétiminoxy ou oxime,
- le symbole j = 2, 3 ou 4, et de préférence j = 3 ou 4.

Des exemples de groupements Y sont les mêmes que ceux cités ci-dessus lorsque le symbole Z est un groupement hydrolysable et condensable, c'est-à-dire différent d'un groupement hydroxyle.

Les agents de réticulation **B** sont des produits accessibles sur le marché des silicones. De plus, leur emploi dans les compositions durcissant dès la température ambiante est connu. Il figure notamment dans les brevets français FR 1 126 411, FR 1 179 969, FR 1 189 216, FR 1 198 749, FR 1 248 826, FR 1 314 649, FR 1 423 477, FR 1 432 799 et FR 2 067 636.

L'agent de réticulation **B** présente au moins un groupe hydrolysable tel que :

- acyloxy de formule -O-CO-R"",
- alcoxy de formule -O-R"",
- amino de formule $-NR^{21}R^{22}$,
- amido de formule $-NR^{21}COR^{22}$,
- alcényloxy de formule $-O-CR^{21}=CHR^{22}$,
- aminoxy de formule $-O-NR^{21}R^{22}$,
- cétiminoxy de formule $-O-N=CR^{21}R^{22}$ ou

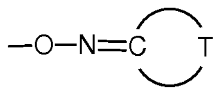,

où R"" représente un radical alkyle ou aryle ayant de 1 à 15 atomes de carbone, $R^{21}$ et $R^{22}$, identiques ou différents, représentent des radicaux alkyle ou aryle contenant de 1 à 8 atomes de carbone et T un radical alkylène contenant de 4 à 8 atomes de carbone. Parmi les radicaux R"", $R^{21}$ et $R^{22}$, on peut citer tout particulièrement les radicaux méthyl, éthyl, cyclohexyl et phényl. Parmi les radicaux T, on peut citer tout particulièrement ceux de formule : $-(CH_2)_4-$, $-(CH_2)_5-$ et $-(CH_2)_6-$.

A titre d'autres exemples d'agent de réticulation **B,** on peut citer les alcoxysilanes et les produits d'hydrolyse partielle de ce silane de formule générale (XIV) suivante :

$$R^{23}_kSi(OR^{24})_{(4-k)} \qquad (XIV)$$

dans laquelle :

- les symboles $R^{23}$, identiques ou différents, représentent des radicaux alkyles ayant de 1 à 8 atomes de carbone, tels que les radicaux méthyle, éthyle, propyle, butyle, pentyle, éthyl-2 hexyle, octyle et décyle, des radicaux oxyalkylènes en $C_3$-$C_6$,
- le symbole $R^{24}$ représente un groupe hydrocarboné aliphatique saturé ou insaturé, linéaire ou ramifié, un groupe carbocyclique, saturé ou insaturé et/ou aromatique, monocyclique ou polycyclique, et
- k est égal à 0, 1 ou 2.

Comme exemple de radicaux oxyalkylènes en $C_3$-$C_6$ on peut citer les radicaux suivants :

- $CH_3OCH_2CH_2-$
- $CH_3OCH_2CH(CH_3)-$
- $CH_3OCH(CH_3)CH_2-$
- $C_2H_5OCH_2CH_2CH_2-$

Les réticulants acyloxysilanes sont bien connus depuis longtemps. Ils sont décrits notamment dans les brevets US 3 077 465, US 3 382 205, US 3 701 753, US 3 957 714, US 4 115 356, US 4 273 698, FR 2 429 811 et FR 2 459 820.

A titre d'exemple d'alcoxysilanes, on peut citer ceux de formule :

- $Si(OCH_3)_4$
- $Si(OCH_2CH_3)_4$
- $Si(OCH_2CH_2CH_3)_4$
- $(CH_3O)_3SiCH_3$
- $(C_2H_5O)_3SiCH_3$
- $(CH_3O)_3Si(CH=CH_2)$
- $(C_2H_5O)_3Si(CH=CH_2)$
- $(CH_3O)_3Si(CH_2-CH=CH_2)$

- $(CH_3O)_3Si[CH_2-(CH_3)C=CH_2]$
- $(C_2H_5O)_3Si(OCH_3)$
- $Si(OCH_2-CH_2-OCH_3)_4$
- $CH_3Si(OCH_2-CH_2-OCH_3)_3$
- $(CH_2=CH)Si(OCH_2CH_2OCH_3)_3$
- $C_6H_5Si(OCH_3)_3$
- $C_6H_5Si(OCH_2-CH_2-OCH_3)_3$.

Les réticulants cétiminoxysilane sont bien connus depuis longtemps. Ils sont par exemple décrits dans les brevets français FR 1 314 649, FR 1 371 250, américains US 3 678 003 et US 3 986 999, dans le brevet britannique GB 1 468 467, dans le brevet belge BE 901 479 et dans le brevet européen EP 157 580.

A titre d'exemple de cétiminoxysilanes, on peut citer ceux de formule :

- $CH_3Si[-O-N=C(CH_3)_2]_3$
- $CH_3Si[-O-N=C(CH_3)C_2H_5]_3$
- $CH_2=CHSi[-O-N=C(CH_3)C_2H_5]_3$
- $C_6H_5Si[-O-N=C(CH_3)_2]_3$
- $CH_3Si[-O-N=C(C_2H_5)(CH_2)_3CH_3]_3$
- $[(CH_3)_2C=N-O-]Si[-O-N=C(CH_3)C_2H_5]_3$
- $CH_3Si[-O-N=C(CH_3CH(C_2H_5)(CH_2)_3CH_3]_3$
- $CH_3Si[-O-N=C(CH_3CH(C_2H_5)(CH_2)_3CH_3]_3$
- 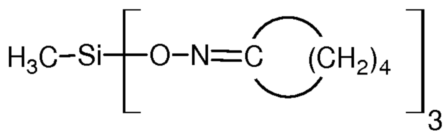
- 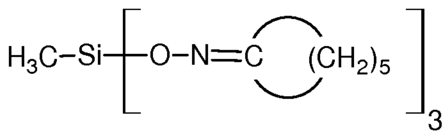

A titre d'exemple d'acyloxysilanes, on peut citer ceux de formule :

- $CH_3Si(OCOCH_3)_3$
- $C_2H_5Si(OCOCH_3)_3$
- $CH_2=CHSi(OCOCH_3)_3$
- $C_6H_5Si(OCOCH_3)_3$
- $CH_3Si[OCOCH(C_2H_5)-(CH_2)_3-CH_3]$
- $CF_3CH_2CH_2Si(OCOC_6H_5)_3$
- $CH_3Si(OCOCH_3)_2[OCOH(C_2H_5)-(CH_2)_3-CH_3]$
- $CH_3COOSi[OCOCH(C_2H_5)-(CH_2)_3-CH_3]$

Comme autres exemples d'agent de réticulation **B,** on peut citer le polysilicate d'éthyle, ou le polysilicate de n-propyle.

Parmi les agents de réticulation **B,** on préfère plus particulièrement les alcoxysilanes, les cétiminoxysilanes, les silicates d'alkyle et les polysilicates d'alkyle, dans lesquels les radicaux organiques sont des radicaux alkyles ayant de 1 à 4 atomes de carbone.

De préférence, on préfère les agents de réticulation **B** suivants, qui peuvent être utilisés seuls ou en mélange :

- le polysilicate d'éthyle et le polysilicate de n-propyle ;
- les alcoxysilanes tels que des dialcoxysilanes, par exemple des dialkyldialcoxysilanes, des trialcoxysilanes, par exemple des alkyltrialcoxysilanes, et des tétraalcoxysilanes, et de préférence le propyltriméthoxysilane, le méthyltriméthoxysilane, le méthyltriéthoxysilane, l'éthyltriméthoxysilane, l'éthyltriéthoxysilane, l'isobutyltriméthoxysilane, l'isobutyltriéthoxysilane, le propyltriéthoxysilane, le tétraméthoxysilane, le tétraéthoxysilane, le tétrapropoxysilane, le tétrabutoxysilane, le 1,2-bis(triméthoxysilyl)éthane, le 1,2-bis(triéthoxysilyl)éthane, le tétraisopropoxysilane, le phényltriéthoxysilane, le phényltriméthoxysilane, vinyltriéthoxysilane, le vinyltriméthoxysilane et ceux de formules

suivantes : $CH_2=CHSi(OCH_2CH_2OCH_3)_3$, $[CH_3][OCH(CH_3)CH_2OCH_3]Si[OCH_3]_2$, $Si(OC_2H_4OCH_3)_4$ et $CH_3Si(OC_2H_4OCH_3)_3$,

- les acyloxysilanes tels que les acétoxysilanes suivants : le tétraacétoxysilane, le méthyltriacétoxysilane, l'éthyltriacétoxysilane, le vinyltriacétoxysilane, le propyltriacétoxysilane, le butyltriacétoxysilane, le phényltriacétoxysilane, l'octyltriacétoxysilane, le diméthyldiacétoxysilane, le phénylméthyldiacétoxysilane, le vinylméthyldiacétoxysilane, le diphényldiacétoxysilane et le tétraacétoxysilane,
- les silanes comprenant des groupements alcoxy et acétoxy tels que : le méthyldiacétoxyméthoxysilane, le méthylacétoxydiméthoxysilane, le vinyldiacétoxyméthoxysilane, le vinylacétoxydiméthoxysilane, le méthyldiacétoxyéthoxysilane et le méthylacétoxydiéthoxysilane,
- méthyltris(méthyléthyl-cétoximo)silane, le 3-cyanopropyltriméthoxysilane, le 3-cyanopropyl-triéthoxysilane, 3-(glycidyloxy)propyltriéthoxysilane, le vinyl-tris(méthyléthylcétoximo) silane, le tétra-kis(méthyléthylcétoximo)silane.

On utilise généralement de 0,1 à 60 parties en poids d'agent de réticulation **B** pour 100 parties en poids de polyorganosiloxane **A.** De préférence, on utilise de 0,5 à 15 parties en poids pour 100 parties en poids de polyorganosiloxane **A.**

La composition selon l'invention peut comprendre en outre au moins une charge **D.** Les charges éventuellement prévues sont de préférence minérales. Elles peuvent être notamment siliceuses. S'agissant des matières siliceuses, elles peuvent jouer le rôle de charge renforçante ou semi-renforçante. Les charges siliceuses renforçantes sont choisies parmi les silices colloïdales, les poudres de silice de combustion et de précipitation ou leurs mélanges. Ces poudres présentent une taille moyenne de particule généralement inférieure à 0,1 μm (micromètres) et une surface spécifique BET supérieure à 30 $m^2/g$, de préférence comprise entre 30 et 350 $m^2/g$. Les charges siliceuses semi-renforçantes telles que des terres de diatomées ou du quartz broyé, peuvent être également employées. En ce qui concerne les matières minérales non siliceuses, elles peuvent intervenir comme charge minérale semi-renforçante ou de bourrage. Des exemples de ces charges non siliceuses utilisables seules ou en mélange sont le noir de carbone, le dioxyde de titane, l'oxyde d'aluminium, l'alumine hydratée, la vermiculite expansée, la vermiculite non expansée, le carbonate de calcium, l'oxyde de zinc, le mica, le talc, l'oxyde de fer, le sulfate de baryum et la chaux éteinte. Ces charges ont une granulométrie généralement comprise entre 0,001 et 300 μm (micromètres) et une surface BET inférieure à 100 $m^2/g$. De façon pratique mais non limitative, les charges employées peuvent être un mélange de quartz et de silice. Les charges peuvent être traitées par tout produit approprié. Sur le plan pondéral, on préfère mettre en oeuvre une quantité de charge comprise entre 1% et 50% en poids, de préférence entre 1% et 40% en poids par rapport à l'ensemble des constituants de la composition.

Dans le cas du carbonate de calcium, cette charge peut être un carbonate de calcium synthétique obtenu par voie chimique plus connu sous le terme de « carbonate de calcium précipité » ou un carbonate de calcium naturel broyé préparé, par exemple, à partir de la craie, la calcite, le marbre ou à partir de leur mélange. Ces deux familles de carbonate de calcium peuvent avoir subi un traitement de surface non réactif. Ce type de traitement consiste à recouvrir la surface des charges par une substance organique. Parmi de tels composés organiques utiles, les acides gras et principalement l'acide stéarique ou l'un de ses sels sont préférés. Un carbonate de calcium utile peut aussi résulter d'un traitement de surface réactif réalisé grâce à des agents de couplage tels que les organotrialcoxysilanes qui sont très largement utilisés comme agents de couplage.

De préférence, le carbonate de calcium naturel broyé a une surface spécifique strictement inférieure à 3 $m^2/g$, mesurée selon la méthode BET et a été traité en surface par au moins un acide gras contenant de 10 à 24 atomes de carbone ou son sel respectif choisi parmi les sels de calcium, magnésium, zinc ou leur mélange et de préférence a été traité en surface par un acide stéarique ou son sel respectif de calcium, magnésium ou zinc. De préférence, la quantité de carbonate de calcium naturel broyé ajoutée à la composition est comprise entre 1 et 100 parties en poids par rapport au poids total de la composition selon l'invention.

En combinaison avec ces charges peuvent être utilisés des pigments minéraux et/ou organiques ainsi que des agents améliorant la résistance thermique (sels et oxydes de terres rares tels que les oxydes et hydroxydes cériques) et/ou la résistance à la flamme des élastomères. Par exemple, on peut utiliser les cocktails d'oxyde décrits dans la demande internationale WO 98/29488. Parmi les agents améliorant la résistance à la flamme peuvent être cités les dérivés organiques halogénés, les dérivés organiques du phosphore, les dérivés du platine tels que l'acide chloroplatinique (ses produits de réaction avec des alcanols, des éthers-oxydes), les complexes chlorure platineux-oléfines. Ces pigments et agents représentent ensemble au plus 20% du poids des charges.

La composition selon l'invention peut aussi comprendre au moins un promoteur d'adhérence **E** tel que par exemple les composés organosiliciques portant à la fois :

- un ou des groupes hydrolysables liés à l'atome de silicium, et
- un ou des groupes organiques substitués par des radicaux comprenant un atome d'azote ou choisis dans le groupe des radicaux (méth)acrylate, époxy, et alcényle, et plus préférentiellement encore dans le groupe constitué par les

composés suivants pris seul ou en mélange :

- vinyltriméthoxysilane (VTMO),
- 3-glycidoxypropyl-triméthoxysilane (GLYMO),
- méthacryloxypropyltriméthoxysilane (MEMO),
- $[H_2N(CH_2)_3]Si(OCH_2CH_2CH_3)_3$,
- $[H_2N(CH_2)_3]Si(OCH_3)_3$
- $[H_2N(CH_2)_3]Si(OC_2H_5)_3$
- $[H_2N(CH_2)_4]Si(OCH_3)_3$
- $[H_2NCH_2CH(CH_3)CH_2CH_2]SiCH_3(OCH_3)_2$
- $[H_2NCH_2]Si(OCH_3)_3$
- $[n\text{-}C_4H_9\text{-}HN\text{-}CH_2]Si(OCH_3)_3$
- $[H_2N(CH_2)_2NH(CH_2)_3]Si(OCH_3)_3$
- $[H_2N(CH_2)_2NH(CH_2)_3]Si(OCH_2CH_2OCH_3)_3$
- $[CH_3NH(CH_2)_2NH(CH_2)_3]Si(OCH_3)_3$
- $[H(NHCH_2CH_2)_2NH(CH_2)_3]Si(OCH_3)_3$
- 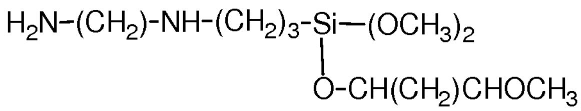
- 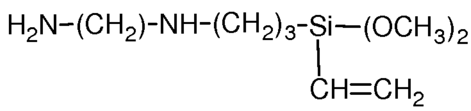

L'agent promoteur d'adhérence **E** peut être présent dans la composition silicone selon l'invention en une quantité comprise entre 0% et 20% en poids, de préférence entre 1% et 20% en poids, par rapport au poids du polyorganosiloxane **A.**

Outre les constituants principaux, des polymères polyorganosiloxanes linéaires non réactifs **F** peuvent être introduits dans le dessein d'agir sur les caractéristiques physiques des compositions conformes à l'invention et/ou sur les propriétés mécaniques des élastomères issus du durcissement de ces compositions.

Ces polymères polyorganosiloxanes linéaires non réactifs **F** sont bien connus ; ils comprennent plus spécialement : des polymères $\alpha,\omega$-bis(triorganosiloxy) diorganopolysiloxanes de viscosités d'au moins 10 mPa.s à 25°C, formés essentiellement de motifs diorganosiloxy et d'au plus 1% de motifs monoorganosiloxy et/ou siloxy, les radicaux organiques liés aux atomes de silicium étant choisis parmi les radicaux méthyl, vinyl et phényl. De préférence, 60% au moins de ces radicaux organiques sont des radicaux méthyles et 10% au plus sont des radicaux vinyles. La viscosité de ces polymères peut être comprise entre 10 mPa.s et $10^6$ mPa.s à 25°C ; il s'agit alors d'huiles silicones plus ou moins visqueuses (huiles silicones). Lorsque la viscosité est supérieure à $10^6$ mPa.s, on les décrit comme des gommes silicones. On peut choisir de préférence celles dont la consistance est comprise entre 200 et 2000. Ils comprennent donc des huiles d'aspect fluide à visqueux et des gommes molles à dures. Ils sont préparés selon les techniques usuelles décrites plus précisément dans les brevets français FR 978 058, FR 1 025 150, FR 1 108 764, FR 1 370 884. On utilise de préférence les huiles $\alpha,\omega$-bis (triméthylsiloxy) diméthylpolysiloxanes de viscosité allant de 10 mPa.s à 1 000 mPa.s à 25°C. Ces polymères qui jouent le rôle de plastifiants peuvent être introduits à raison d'au plus 70 parties en poids, de préférence de 5 à 20 parties en poids pour 100 parties en poids du polyorganosiloxane **A.**

D'autres agents auxiliaires et additifs usuels peuvent être incorporés à la composition selon l'invention. Ceux-ci sont choisis en fonction des applications dans lesquelles sont utilisées lesdites compositions.

La composition selon l'invention peut comprendre les quantités suivantes :

- pour 100 parties en poids d'au moins un polyorganosiloxane **A** tel que décrit ci-dessus,
- de 0,1 à 60 parties en poids, de préférence de 1 à 15 parties en poids d'au moins un agent de réticulation **B**,
- une quantité catalytiquement efficace d'au moins un composé **C** selon l'invention et tel que décrit ci-dessus,
- de 0 à 150 parties en poids d'au moins une charge **D,** et de préférence de 0,1 à 150 parties en poids,
- de 0 à 20 parties en poids d'au moins un promoteur d'adhérence **E,** et de préférence de 0,1 à 20 parties en poids, et
- de 0 à 150 parties en poids d'au moins un polymère polyorganosiloxane linéaires non réactifs **F**, et de préférence de 1 à 150 parties en poids.

Les compositions de l'invention peuvent en outre comprendre des additifs fonctionnels usuels. Comme familles d'additifs fonctionnels usuels, on peut citer :

- les modulateurs d'adhérence,
- les additifs pour augmenter la consistance,
- les pigments,
- les additifs de tenue thermique, de tenue aux huiles ou de tenue au feu, par exemple les oxydes métalliques.

Plus généralement, sur le plan quantitatif, les compositions selon l'invention peuvent présenter des proportions standards dans le domaine technique considéré, sachant que l'on doit tenir compte également de l'application visée.

Selon un autre mode de réalisation, la composition selon l'invention ne contient pas de catalyseur ayant dans sa structure au moins un atome d'étain.

Selon une autre variante de l'invention, le composé **C** est le seul catalyseur de polycondensation présent dans ladite composition qui peut éventuellement contenir au moins un catalyseur de fonctionnalisation.

Selon un autre mode de réalisation, l'invention concerne une composition monocomposante RTV-1 se présentant en un seul emballage **P** étanche à l'air et comprenant :

a) au moins un polyorganosiloxane **A** tel que défini ci-dessus,
b) au moins un agent de réticulation **B** tel que défini ci-dessus,
c) une quantité catalytiquement efficace d'au moins un composé **C** tel que défini ci-dessus, et
d) éventuellement au moins une charge **D.**

La composition monocomposante RTV-1 se présente en une seule partie. Elle est stable au stockage en l'absence d'eau et durcit en présence d'eau pour former un élastomère. Elle peut être fabriquée en mélangeant les différents constituants à l'abri de l'humidité, avec ou sans chauffage. Le catalyseur est de préférence incorporé à la fin. De préférence, le mélange est effectué sous pression réduite pour favoriser le départ des matières volatiles.

Ainsi stockée en milieu confiné et à l'abri de la présence d'eau et d'humidité de l'air, la composition monocomposante RTV-1 est stable au stockage pendant plusieurs mois.

Les compositions monocomposantes RTV-1, conformes à l'invention, sont utilisées telles quelles, c'est-à-dire non diluées, ou sous forme de dispersions dans des diluants, et sont stables au stockage en l'absence d'humidité ou d'eau et durcissent dès les basses températures (après départ des solvants dans le cas des dispersions) en présence d'eau pour former des élastomères. Des compositions monocomposantes RTV-1 sont décrites en détail par exemple dans les brevets EP 141 685, EP 147 323, EP 102 268, EP 21 859, FR 2 121 289 et FR 2 121 631.

Après le dépôt des compositions selon l'invention, préparées à partir d'une composition monocomposante RTV-1, sur des substrats solides en atmosphère humide, on constate qu'un processus de durcissement en élastomère se met en oeuvre. Il s'effectue de l'extérieur à l'intérieur de la masse déposée. Une peau se forme d'abord en surface puis la réticulation se poursuit en profondeur et se traduit par un durcissement de l'élastomère silicone. La formation complète de la peau, qui se traduit par un toucher non collant de la surface, demande une période de temps de quelques minutes, cette période dépendant du taux d'humidité relative de l'atmosphère entourant les compositions et de la faculté de réticulation de celles-ci. La couche déposée peut avoir une épaisseur variable, comprise généralement entre 0,15 mm et plusieurs centimètres, de préférence entre 1 mm et 1 cm.

Par ailleurs, le durcissement en profondeur des couches déposées, qui doit être suffisant pour permettre le démoulage et la manipulation des élastomères formés, nécessite une période de temps plus longue. En effet, cette période dépend non seulement des facteurs cités ci-dessus pour la formation du toucher non collant mais aussi de l'épaisseur des couches déposées, laquelle épaisseur s'échelonne généralement entre 0,5 mm et plusieurs centimètres. Les compositions monocomposantes peuvent être employées pour de multiples applications comme le jointoiement dans l'industrie du bâtiment, l'assemblage des matériaux les plus divers (métaux, matières plastiques, caoutchoucs naturels et synthétiques, bois, carton, faïence, brique, céramique, verre, pierre, béton, éléments de maçonnerie), l'isolation de conducteurs électriques, l'enrobage de circuits électroniques, la préparation de moules servant à la fabrication d'objets en résines ou mousses synthétiques.

Un autre objet de l'invention concerne une composition bicomposante RTV-2, précurseur de la composition selon l'invention et telle que définie ci-dessus, se présentant en deux emballages distincts **P1** et **P2**, caractérisée en ce que :

a) l'emballage **P1** est étanche à l'air et comprend :

- une quantité catalytiquement efficace d'au moins un composé **C** selon l'invention et tel que défini ci-dessus, et
- au moins un agent de réticulation **B** tel que défini ci-dessus, et

b) l'emballage **P2** ne contient ni ledit composé **C** ni ledit agent de réticulation **B** et comprend :

- pour 100 parties en poids d'au moins un polyorganosiloxane **A** tel que défini ci-dessus, et
- de 0 à 10 partie(s) en poids d'eau.

Une composition bicomposante RTV-2 se présente en deux emballages distincts : **P1** qui contient le catalyseur et est étanche à l'air et **P2.** Elles sont conditionnées après incorporation du catalyseur en deux fractions séparées, l'une des fractions pouvant ne renfermer par exemple que le catalyseur selon l'invention ou un mélange avec l'agent réticulant. La fabrication des compositions bicomposantes RTV-2 conformes à l'invention s'effectue également par mélange des divers constituants dans des appareils appropriés. Des compositions bicomposantes RTV-2 sont décrites en détail par exemple dans les brevets EP 118 325, EP 117 772, EP 10 478, EP 50 358, EP 184 966, US 3 801 572 et US 3 888 815, cités comme référence.

La composition bicomposante RTV-2 permet après mélange des deux parties **P1** et **P2** d'obtenir la composition selon l'invention. Il s'agit d'une composition « précurseur » de la composition selon l'invention. Chaque partie de la composition bicomposante RTV-2 peut être fabriquée en mélangeant les différents constituants. Les deux parties peuvent être stockées et commercialisées sous la forme d'un kit. Lors de son utilisation, les deux parties sont mélangées, et ce mélange peut être déposé sur un substrat solide. La couche déposée peut avoir une épaisseur variable, comprise généralement entre 0,15 mm et plusieurs centimètres, de préférence entre 1 mm et 1 cm. La mise en présence du polyorganosiloxane **A,** de l'eau et du composé **C** qui joue le rôle de catalyseur déclenche les réactions conduisant au durcissement de la composition jusqu'à l'obtention d'un élastomère entièrement dur.

La composition selon l'invention présente avantageusement une cinétique de durcissement comparable à celle des compositions actuellement disponibles sur le marché contenant un catalyseur à base d'étain, aussi bien en termes de vitesse de formation de peau que de vitesse de durcissement en profondeur. De plus, avantageusement, les performances de cette composition ne sont pas modifiées par la présence de promoteur d'adhérence.

Les compositions selon l'invention sont particulièrement utiles pour des applications de moulage, en particulier lorsqu'elles se présentent sous la forme de bicomposant RTV-2. Pour la mise en oeuvre des compositions selon l'invention

dans cette application, les techniques de coulée ou d'application via une spatule, un pinceau ou par pulvérisation sont utiles.

Comme exemple de technique de moulage on peut citer :

- le « moulage bateau » qui est destiné à la fabrication des moules autoportants, en une ou plusieurs pièces, par simple coulée de la composition après mélange des deux parties du RTV-2 à l'état liquide sur le modèle initial. Ce procédé est préféré pour les formes relativement simples et sans contre dépouilles importantes ;
- le « moulage sous chape en une ou deux parties », et
- le « moulage par estampage » qui est préféré pour la prise d'empreinte de modèles inclinés, verticaux ou en surplomb, en général de grandes dimensions ou lorsqu'il est impossible de déplacer le modèle.

Un autre objet de l'invention concerne un élastomère silicone obtenu :

- après avoir laissé durcir en présence d'eau ou d'humidité de l'air la composition selon l'invention et telle que décrite ci-dessus ; ou
- après avoir mis en contact avec l'humidité de l'air le contenu de l'emballage **P** de la composition monocomposante RTV-1 selon l'invention et telle que décrite ci-dessus et laissé durcir ledit contenu ; ou
- après avoir mélangé le contenu des emballages **P1** et **P2** de la composition bicomposante RTV-2 selon l'invention et telle que décrite ci-dessus et laissé durcir le mélange.

L'élastomère silicone obtenu a avantageusement une dureté au moins équivalente à celle des élastomères obtenus à partir de compositions contenant un catalyseur à base d'étain. Ils peuvent en outre être translucides et ne pas jaunir au cours du temps.

Un autre objet de l'invention concerne un procédé d'enduction de la composition selon l'invention et telle que définie ci-dessus sur un support souple **S** comprenant les étapes a), b) et c) suivantes :

a) on prépare une composition selon l'invention et telle que définie ci-dessus,
b) puis on dépose de manière continue ou discontinue ladite composition sur ledit support souple **S**, et
c) on laisse durcir ladite composition silicone selon l'invention en présence d'humidité apportée par l'air ambiant ou par addition préalable d'eau de manière à former un élastomère silicone.

Selon une variante du procédé selon l'invention, la composition à l'étape a) est préparée après avoir mélangé le contenu des emballages **P1** et **P2** de la composition bicomposante RTV-2 selon l'invention et telle que tel que défini ci-dessus ou à partir du contenu de l'emballage **P** de la composition monocomposante RTV-1 selon l'invention et telle que tel que défini ci-dessus.

L'enduction de compositions silicones selon l'invention sur des supports souples vise de nombreuses applications. Par exemple, lorsque le support souple est un textile, des propriétés d'hydrofugation sont visées ou lorsque le support est un papier ou un polymère de type PVC, PET..., des propriétés d'anti-adhérence sont le plus souvent recherchées.

Ainsi, une fois appliquée sur un support, la composition silicone selon l'invention durcit grâce à l'humidité de l'air et/ou par la présence d'eau dans la composition pour former un revêtement solide en élastomère silicone. Dans ces compositions silicones liquides d'enduction, la phase silicone peut être diluée dans un solvant.

Les supports souples **S** revêtus d'un film silicone ou d'une couche silicone durcie par réticulation anti-adhérent sont choisis de préférence dans le groupe constitué par les supports en textile, en papier, en polychlorure de vinyle, en polyester, en polypropylène, en polyamide, en polyéthylène, en polyuréthanne ou en polyéthylène téréphtalate.

On entend par textile au sens de l'invention, un terme générique englobant toutes les structures textiles. Les textiles peuvent être constitués par des fils, fibres, filaments et/ou autres matières. Ils comprennent notamment les étoffes souples, qu'elles soient tissées, collées, tricotées, tressées, en feutre, aiguilletées, cousues, ou réalisées par un autre mode de fabrication.

Ces textiles peuvent être ajourés, c'est à dire comprendre des espaces libres non constitués de textile. Pour que l'enduction de la composition silicone de l'invention soit efficace, il est préférable que la plus petite des dimensions de ces espaces libres soit inférieure à 5 mm, notamment inférieure à 1 mm.

Selon l'invention, tout type de support souple **S** en textile peut être utilisé. A titre indicatif, on peut citer :

- les textiles naturels, tels que les textiles d'origine végétale, comme le coton, le lin, le chanvre, la jute, la coco, les fibres cellulosique du papier ; et les textiles d'origine animale, comme la laine, les poils, le cuir et les soies ;
- les textiles artificiels, tels que les textiles cellulosiques, comme la cellulose ou ses dérivés ; et les textiles protéiniques d'origine animale ou végétale ; et

- les textiles synthétiques, tels que le polyester, le polyamide, les alcools polymalliques, le chlorure de polyvinyle, le polyacrylonitrile, les polyoléfines, l'acrylonitrile, les copolymères (méth)acrylate-butadiène-styrène et le polyuréthane.

Les textiles synthétiques obtenus par polymérisation ou polycondensation peuvent notamment comprendre dans leurs matrices différents types d'additifs, tels que des pigments, des délustrants, des matifiants, des catalyseurs, des stabilisants thermiques et/ou lumière, des agents anti-statiques, des ignifugeants, des agents antibactériens, antifongiques, et/ou anti-acariens.

Comme type de supports souples en textile, on peut citer notamment les supports obtenus par entrecroisement rectiligne des fils ou tissus, les supports obtenus par entrelacement curviligne des fils ou tricots, les surfaces mixtilignes ou tulles, les supports non tissés et les supports composites. Parmi la multitude de supports textiles possibles utilisables dans le procédé de l'invention on peut mentionner : les feutres, les denims, les tissés jacquards, les aiguilletés, les cousus, les crochetés, les grenadines, les dentelles et dentelés, les damas, les voiles, les alpagas, les barathéas, les basins, les bouclés, les brocarts, les calicots, les velours, les canevas, les chiffons, les flockés, les encollés, les étamines, les tressés, les failles, les foulards, les gazes, les géotextiles, les jaspés, les matelassés, les touffetés, les organzas, les plissés, les rubans et les toiles.

Le support souple S en textile utilisé dans le procédé de la présente invention peut être constitué d'un ou plusieurs textiles, identiques ou différents, assemblés par diverses manières. Le textile peut être mono- ou multicouche(s). Le support textile peut par exemple être constitué d'une structure multicouche pouvant être réalisé par différents moyens d'assemblage, tels que des moyens mécaniques comme la couture, le soudage, ou le collage par point ou continu.

Le support souple **S** en textile peut, outre le procédé d'enduction selon la présente invention, subir un ou plusieurs autres traitements, également appelés traitement de finition ou d'ennoblissement. Ces autres traitements peuvent être effectués avant, après et/ou pendant ledit procédé d'enduction de l'invention. Comme autres traitements, on peut notamment citer : la teinture, l'impression, le contre collage, l'enduction, l'assemblage avec d'autres matériaux ou surfaces textiles, le lavage, le dégraissage, le préformage ou le fixage.

Selon une disposition préférée de réalisation de l'invention, le support souple S en textile est une dentelle ou une bande élastique.

Les textiles ainsi obtenus, tels quels ou transformés en articles textiles, peuvent être utilisés dans de nombreuses applications, telles que, par exemple, dans le domaine de l'habillement, notamment la lingerie comme les dentelles de hauts de bas ou de soutien-gorge, et les articles d'hygiène, tels que des bandes de contention ou des pansements. Ces articles textiles peuvent être repositionnés à différents endroits du corps ou d'un vêtement par exemple grâce à l'adhérence apportée par l'élastomère silicone.

En pratique, le taux de dépôt de la composition selon l'invention sur le support souple S est compris entre 0,1 $g/m^2$ et 1 $g/m^2$ de préférence 0,3 $g/m^2$ et 0,5 $g/m^2$, ce qui correspond à des épaisseurs de l'ordre du micromètre.

D'autres buts, caractéristiques et avantages de l'invention apparaîtront des exemples suivants, qui sont donnés à titre purement illustratif et nullement limitatif.

**EXEMPLES**

**Notation :**

- OsBu : sec-butanolate
- OnBu : n-butanolate
- OtBu : tert-butanolate
- OBO : 2-butyloctanolate
- $OC_4H_9$ : butanolate (mélange de composés linéaires et ramifiés)
- OEH : 2-éthylhexanolate
- OEt : éthanolate
- OiPr : iso-propanolate
- OnPr : n-propanolate
- OPr2Me : 2-méthylpropan-1-olate
- EAA : acétoacétate d'éthyle
- EEA : éthyl acétate d'éthyle
- EPA : propionyl acétate d'éthyle
- E2EA : 2-éthyl acétoacétate d'éthyle
- F.EEA : trifluoro acétoacétate d'éthyle

- t.EAA : t-butyl acétatoacétate d'éthyle
- C4EA : cyclopropyl acétoacétate d'éthyle
- PrOH : propanol
- PAA : acétoacétonate de propyle
- EPAA : propionyl acétoacétate d'éthyle
- acac : acétylacétone
- F.acac.F : hexafluoroacétylacétone
- Ph.acac.F : 4,4,4-trifluoro-1-phényl-1,3-butanedione
- Ph.acac.Ph : 1,3-diphényl-1,3-propanedione
- t.acac : 2,2,6,6-tétraméthyl-3,5-heptanedione
- diPrm : diisopropylmalonate
- Aamid : acétoacétamide
- NacNac : bis-N,N'-(2-phenylethyl)-2,4-diiminopentane
- MA : acrylate de méthyle
- DBU : 1,8-diazabicyclo(5.4.0)undéc-7-ène

**Exemple 1: Synthèse et analyse du complexe alcoxyde hétérométallique $AlTi(OsBu)_3(OnBu)_4$**

Les alcoxydes monométalliques $Al(OsBu)_3$ et $Ti(OnBu)_4$ ont été commandés chez Sigma-Aldrich et ont été utilisés dès réception.

$Al(OsBu)_3$ et $Ti(OnBu)_4$ ont été mélangées dans les proportions molaires de 1 mole pour 1 mole et agités pendant 2 heures à température ambiante. L'huile obtenue quantitativement a ensuite été caractérisée par infrarouge.

On a constaté dans le spectre du complexe hétérométallique l'apparition de deux nouvelles bandes très intenses à 1035,8 $cm^{-1}$ et 996,2 $cm^{-1}$, qui correspondent aux vibrations des liaisons C-O dans l'enchainement Al-C-O-C-Ti. Les bandes à 611,7 $cm^{-1}$ et à 515,2 $cm^{-1}$, également très intenses, correspondent aux vibrations des liaisons métal-O dans l'enchaînement Al-O-Ti. Les autres bandes d'intensité moyenne ou faible correspondent aux bandes visibles dans les produits de départ, mais avec des fréquences de résonnance différentes. Ces modifications montrent bien un nouvel environnement chimique autour des métaux Al et Ti, et donc la création d'une nouvelle espèce chimique.

**Exemple 2 : Synthèse de complexes alcoxydes hétérométalliques**

Une série de complexes alcoxydes hétérométalliques a été préparée selon la méthode suivante :
Les alcoxydes monométalliques d'aluminium $Al(OnBu)_3$, $Al(OsBu)_3$, $Al(OBO)_3$, $Al(OiPr)_3$, $Al(OEH)_3$, de magnésium $Mg(OEt)_2$, $Mg(OBO)_2$, de zirconium $Zr(OnBu)_4$, $Zr(OBO)_4$, $Zr(OnBu)_4$, $Zr(OnPr)_4$, $Zr(OEH)_4$, $Zr(OEt)_4$ et de titane $Ti(OBO)_4$, $Ti(OnBu)_4$, $Ti(OiPr)_4$ et $Ti(OEH)_4$, proviennent de Sigma-Aldrich et ont été utilisés dès réception ou concentrés sous pression réduite.

Les espèces alcoxydes monométalliques sélectionnées en fonction du complexe désiré ont été mélangées dans les proportions molaires souhaitées et agitées pendant 2 heures à température ambiante. Une huile a été obtenue quantitativement.

Ci-dessous est donnée la liste des complexes hétérométalliques synthétisés. Les formules générales indiquées représentent la composition du complexe et les rapports molaires entre les différents atomes ou groupements atomiques tels qu'ils devraient être d'après la composition du milieu réactionnel et en supposant que les réactions sont totales. Un homme du métier comprendra bien sûr que les produits réactionnels obtenus peuvent s'écarter de ces formules générales.

Complexes aluminium-zirconium :

- $AlZr(OnBu)_7$
- $AlZr(OBO)_7$
- $AlZr(OsBu)_3(OnBu)_4$
- $Al_{0,1}Zr(OsBu)_{0,3}(OnBu)_4$
- $Al_{0,2}Zr(OsBu)_{0,6}(OnBu)_4$
- $Al_{0,3}Zr(OsBu)_{0,9}(OnBu)_4$
- $Al_{0,4}Zr(OsBu)_{1,2}(OnBu)_4$
- $Al_{0,5}Zr(OsBu)_{1,5}(OnBu)_4$
- $Al_{0,6}Zr(OsBu)_{1,8}(OnBu)_4$

- $Al_{0,7}Zr(OsBu)_{2,1}(OnBu)_4$
- $Al_{0,8}Zr(OsBu)_{2,4}(OnBu)_4$
- $Al_{0,9}Zr(OsBu)_{2,7}(OnBu)_4$
- $Al_{1,1}Zr(OsBu)_{3,3}(OnBu)_4$
- $Al_{1,2}Zr(OsBu)_{3,6}(OnBu)_4$
- $Al_{1,3}Zr(OsBu)_{3,9}(OnBu)_4$
- $Al_{1,4}Zr(OsBu)_{4,2}(OnBu)_4$
- $Al_{1,5}Zr(OsBu)_{4,5}(OnBu)_4$
- $Al_{1,6}Zr(OsBu)_{4,8}(OnBu)_4$
- $Al_{1,7}Zr(OsBu)_{5,1}(OnBu)_4$
- $Al_{1,8}Zr(OsBu)_{5,4}(OnBu)_4$
- $Al_{1,9}Zr(OsBu)_{5,7}(OnBu)_4$
- $AlZr_{0,1}(OsBu)_3(OnBu)_{0,4}$
- $AlZr_{0,2}(OsBu)_3(OnBu)_{0,8}$
- $AlZr_{0,3}(OsBu)_3(OnBu)_{1,2}$
- $AlZr_{0,4}(OsBu)_3(OnBu)_{1,6}$
- $AlZr_{0,5}(OsBu)_3(OnBu)_2$
- $AlZr_{0,6}(OsBu)_3(OnBu)_{2,4}$
- $AlZr_{0,7}(OsBu)_3(OnBu)_{2,8}$
- $AlZr_{0,8}(OsBu)_3(OnBu)_{3,2}$
- $AlZr_{0,9}(OsBu)_3(OnBu)_{3,6}$
- $Al_2Zr(OnPr)_4(OiPr)_6$
- $Al_2Zr(OnBu)_{10}$
- $Al_2Zr(OnBu)_4(OsBu)_6$
- $Al_2Zr(OEH)_{10}$
- $AlZr_2(OnBu)_{11}$

Complexes magnésium-zirconium :

- $MgZr(OEt)_6$
- $MgZr(OBO)_6$
- $Mg_2Zr(OEt)_8$
- $Mg_3Zr(OEt)_{10}$
- $Mg_4Zr(OEt)_{12}$
- $MgZr_2(OEt)_{11}$

Complexes aluminium-titane :

- $AlTi(OBO)_7$
- $AlTi(OsBu)_3(OnBu)_4$
- $Al_{0,1}Ti(OsBu)_{0,3}(OnBu)_4$
- $Al_{0,2}Ti(OsBu)_{0,6}(OnBu)_4$
- $Al_{0,3}Ti(OsBu)_{0,9}(OnBu)_4$
- $Al_{0,4}Ti(OsBu)_{1,2}(OnBu)_4$
- $Al_{0,5}Ti(OsBu)_{1,5}(OnBu)_4$
- $Al_{0,6}Ti(OsBu)_{1,8}(OnBu)_4$
- $Al_{0,7}Ti(OsBu)_{2,1}(OnBu)_4$
- $Al_{0,8}Ti(OsBu)_{2,4}(OnBu)_4$
- $Al_{0,9}Ti(OsBu)_{2,7}(OnBu)_4$
- $Al_{1,1}Ti(OsBu)_{3,3}(OnBu)_4$
- $Al_{1,2}Ti(OsBu)_{3,6}(OnBu)_4$
- $Al_{1,3}Ti(OsBu)_{3,9}(OnBu)_4$
- $Al_{1,4}Ti(OsBu)_{4,2}(OnBu)_4$
- $Al_{1,5}Ti(OsBu)_{4,5}(OnBu)_4$

- $Al_{1,6}Ti(OsBu)_{4,8}(OnBu)_4$
- $Al_{1,7}Ti(OsBu)_{5,1}(OnBu)_4$
- $Al_{1,8}Ti(OsBu)_{5,4}(OnBu)_4$
- $Al_{1,9}Ti(OsBu)_{5,7}(OnBu)_4$
- $AlTi_{0,1}(OsBu)_3(OnBu)_{0,4}$
- $AlTi_{0,2}(OsBu)_3(OnBu)_{0,8}$
- $AlTi_{0,3}(OsBu)_3(OnBu)_{1,2}$
- $AlTi_{0,4}(OsBu)_3(OnBu)_{1,6}$
- $AlTi_{0,5}(OsBu)_3(OnBu)_{2,0}$
- $AlTi_{0,6}(OsBu)_3(OnBu)_{2,4}$
- $AlTi_{0,7}(OsBu)_3(OnBu)_{2,8}$
- $AlTi_{0,8}(OsBu)_3(OnBu)_{3,2}$
- $AlTi_{0,9}(OsBu)_3(OnBu)_{3,6}$
- $Al_2Ti(OiPr)_{10}$
- $Al_2Ti(OnBu)_{10}$
- $Al_2Ti(OEH)_{10}$

De plus, les complexes commerciaux ci-dessous ont été utilisés :

- Complexe aluminium-zirconium : $Al_2Zr(OC_4H_9)_{10}$
- Complexe magnésium-zirconium : $MgZr(OC_4H_9)_6$
- Complexe aluminium-titane : $Al_2Ti(OC_4H_9)_{10}$
- Complexe magnésium-titane : $MgTi(OC_4H_9)_6$

**Exemple 3 : Synthèse de complexes chélatés hétérométalliques**

Les alcoxydes monométalliques Mg(OEt), $Al(OiPr)_3$, $Al(OsBu)_3$, $Zr(OnPr)_4$, $Zr(OnBu)_4$, $Zr(OnBu)_2(acac)_2$, $Zr(acac)_4$, $Ti(OiPr)_4$, $Ti(OnBu)_4$ et $Ti(EAA)_2(OPr2Me)_2$ proviennent de Sigma-Aldrich et ont été utilisés dès réception ou concentrés sous pression réduite. Des complexes chélatés monométalliques $Mg(EAA)_2$, $Al(OsBu)_2(EAA)_2$, $Al(EAA)_3$, $Zr(OnPr)_2(EAA)_2$, $Zr(OnPr)_2(EEA)_2$, $Al(OnPr)_2(EEA)_2$, $Al(OnPr)_2(EPA)_2$, $Zr(OnPr)_2(E2EA)_2$, $Zr(OnPr)_2(F.EEA)_2$, $Zr(OnPr)_2(t.EAA)_2$, $Zr(OnPr)_2(C4EA)_2$, $Zr(OnPr)(EAA)_3$, $Zr(OnPr)(EPAA)_3$, $Zr(EAA)_4$.PrOH, $Zr(PAA)_4$.PrOH, $Zr(EPAA)_4$.EPAA, $Zr(OnPr)_2(acac)_2$, $Zr(OnPr)_2(F.acac.F)_2$, $Zr(OnPr)_2(Ph.acac.F)_2$, $Zr(OnPr)_2(Ph.acac.Ph)_2$, $Zr(OnPr)_2(t.acac)_2$, $Zr(OnPr)_2(diPrm)_2$, $Zr(diPrm)_4$, $Zr(OnPr)_2(Aamid)_2$, $Zr(OnPr)_2(NacNac)_2$, $Zr(OnPr)_2(MA)_2$, $Zr(OnPr)_2(DBU)_2$.PrOH et $Ti(EAA)_2(OiPr)_2$ ont été préparés selon la méthode suivante :
1 équivalent du complexe alcoxyde monométallique correspondant a été dilué dans du toluène. Puis 1, 2, 3 ou 4 équivalents de ligand correspondant ont été ajoutés au mélange précédent. La solution est ensuite chauffée à 140°C pour ensuite distiller le mélange azéotropique formé par l'alcool libéré et le toluène. Le solvant résiduel a été évaporé.
Les complexes chélatés hétérométalliques ont été préparés selon 3 voies de synthèses.

- Voie 1 : Association d'un complexe alcoxyde monométallique avec un complexe chélaté monométallique

$AlTi(EAA)_3(OnBu)_4$ a été préparé en mélangeant 1 mole de $Al(EAA)_3$ avec 1 mole de $Ti(OnBu)_4$. Le mélange a été agité pendant 2 heures à température ambiante. Lorsque des difficultés de solubilité persistaient, le mélange a été chauffé à 65°C.
Les complexes $AlZr(EAA)_3(OnPr)_4$, $AlZr(EAA)_7$, $AlZr_{0,5}(EAA)_5$, $Al_2Zr(EAA)_{10}$, $AlZr(OsBu)_3(OnPr)_4(diPrm)_2$, $MgZr(EAA)_6$, , $MgTi(EAA)_4(OiPr)_2$ ont été préparés de la même manière avec les complexes de départ correspondants dans les proportions correspondantes.

- Voie 2 : Echange de ligands

$AlZr(EAA)_7$ a été préparé à partir de 4 g de $AlZr(OnBu)_7$ dilués dans 15 mL de toluène. 7 équivalents d'acétoacétonate d'éthyle ont ensuite été ajoutés au mélange précédent qui a été chauffé à 130°C. Puis le mélange azéotropique formé par le butanol libéré et le toluène a été distillé et le solvant résiduel a été évaporé.

- Voie 3 : Synthèse monotope (« one pot »)

$AlZr(EAA)_3(OnPr)_4$, $AlZr(EAA)_3(OnBu)_4$, $AlZr(OiPr)_5(PAA)_2$, $AlTi(EAA)_3(OnBu)_4$ et $AlTi(PAA)_2(OiPr)_5$ et $Al_2Zr(EAA)_6(OnPr)_4$ ont été synthétisés en un seul pot. Pour cela, 2 ou 3 équivalents d'acétoacétonate d'éthyle ou

d'acétoacétonate de propyle ont été ajoutés à un équivalent de $Zr(OnBu)_4$, de $Ti(OnBu)_4$ ou d'$Al(OiPr)_3$. Le mélange a été immédiatement chauffé à 70°C jusqu'à l'obtention d'un mélange homogène qui a été concentré sous pression réduite pour libérer le n-butanol ou l'iso-propanol. Après cela, un équivalent d'$Al(OiPr)_3$, de $Zr(OnBu)_4$, de $Ti(OnBu)_4$ ou de $Zr(OnPr)_4$ a été directement ajouté et, après 2 heures d'agitation à température ambiante, les complexes hétérométalliques désirés ont été obtenus sous forme d'huile jaune clair.

**Exemple 4 : Propriétés catalytiques des complexes hétérométalliques**

Pour tester les propriétés catalytiques des complexes métalliques, des compositions d'empâtage ont été préparées. Pour cela, 3464 g d'une huile $\alpha,\omega$-hydroxypolydiméthylsiloxane de viscosité 20 000 mPa.s ont été mélangés avec 120 g de vinyltriméthoxysilane (VTMO). 16 g de lithine diluée à 0,4% en poids dans du méthanol ont été ensuite ajoutés au mélange formé. Après 5 minutes d'agitation, 400 g de silice de pyrogénation AE55 ont été ajoutés. Le mélange a été concentré sous pression réduite puis stocké en cartouche fermée à l'abri de l'humidité.

Pour chaque test, 25 g de cet empâtage et une quantité de catalyseur ont été mélangés à l'aide d'un speedmixer (2 fois 20 seconde à 2000 tr/min). L'activité catalytique de chaque composition a ensuite été évaluée par la prise de plusieurs mesures dans des conditions de température et d'hygrométrie constante (23°C à 50%) :

- Le temps de formation de peau (TFP) : temps au bout duquel on observe une réticulation de surface. Il est fait avec un bâton de hêtre sur un film d'une épaisseur de 2 mm.
- La dureté (en shore A) : elle traduit la formation du réseau tridimensionnel. Elle a été mesurée d'une part sur la superposition de 3 cordons de 2 mm d'épaisseur, et d'autre part sur un seul cordon de 6 mm d'épaisseur, sur des temps croissants (5h, 1 et 7 jours). Sur le cordon de 6 mm d'épaisseur, deux mesures ont été prises : « > » correspond à la dureté sur la partie supérieure du cordon et « < » correspond à la partie inférieur ou confinée du cordon. « NR » signifie non réticulés, « ND » signifie non démoulable, « D » signifie démoulable et « C » signifie collant. Ces lettres ont été utilisées lorsque la dureté était inférieure à 5.

Les données non déterminées sont notées « n.d ».

Les tests ont été menés sur des catalyseurs hétérométalliques selon l'invention et sur des catalyseurs de l'art antérieur :

- le dilaurate de dibutyl-étain (DBTDL)
- le tétrabutoxytitane $Ti(OnBu)_4$
- le tri(sec-butoxy)aluminium $Al(OsBu)_3$
- le tétrapropoxyzirconium $Zr(OnPr)_4$

Les résultats des catalyseurs de type alcoxydes en quantités équimolaires sont présentés dans le tableau 1 :

Tableau 1

| | Catalyseurs | mmol/ OH | % en pds | TFP | DSA 5h | DSA 1j | DSA7j |
|---|---|---|---|---|---|---|---|
| | | | | 2 mm | 3 × 2 mm | | 6 mm < > |
| catalyseurs de référence | DLDBE | 2,1 | 2,7% | 8 min | D | 26 | 33 30 |
| | $Ti(OnBu)_4$ | 2,1 | 1,4% | 15 min | 20 | 29 | 30 25 |
| | $Al(OsBu)_3$ | 2,1 | 1,0% | NR | NR | NR | NR |
| | $Zr(OnPr)_4$ | 2,1 | 1,4% | n.d. | ND | ND | 18 19 |
| Ex. 1 | $AlZr(OsBu)_3(OBu)_4$ | 2,1 | 2,6% | n.d. | 26 | 27 | 30 25 |
| Ex. 2 | $Al_{1,4}Zr(OsB_U)_{4,2}(OnB_U)_4$ | 2,1 | 2,9% | 5 min | 10 | 23 | 30 25 |
| Ex. 3 | $Al_2Zr(OC_4H_9)_{10}$ | 2,1 | 3,3% | 5 min | 19 | 29 | 29 24 |
| Ex. 4 | $AlTi(OsBu)_3(OnBu)_4$ | 2,1 | 2,5% | n.d. | 28 | 33 | 33 28 |
| Ex. 5 | $Al_{0,5}Ti(OsBu)_{1,5}(OnBu)_4$ | 2,1 | 1,9% | 8 min | 22 | 28 | 32 26 |

(suite)

| | Catalyseurs | mmol/ OH | % en pds | TFP | DSA 5h | DSA 1j | DSA7j |
|---|---|---|---|---|---|---|---|
| | | | | 2 mm | 3 × 2 mm | | 6 mm < > |
| Ex. 6 | $Al_2Ti(OC_4H_9)_{10}$ | 2,1 | 3,2% | 10 min | 25 | 28 | 31 26 |
| Ex. 7 | $AlTi_{0,2}(OsBU)_3(OnBu)_{0,8}$ | 2,1 | 1,3% | 8 min | 14 | 29 | 30 28 |

Les résultats des catalyseurs de type chélates mixtes en quantités équimolaires sont présentés dans le tableau 2 :

Tableau 2

| | Catalyseurs | mmol/ OH | % en pds | TFP | DSA 5h | DSA 1j | DSA7j |
|---|---|---|---|---|---|---|---|
| | | | | 2 mm | 3 × 2 mm | | 6 mm < > |
| catalyseurs de référence | DLDBE | 2,1 | 2,7% | 8 min | D | 26 | 33 30 |
| | $Ti(OnBu)_4$ | 2,1 | 1,4% | 15 min | 20 | 29 | 30 25 |
| | $Al(OsBu)_3$ | 2,1 | 1,0% | NR | NR | NR | NR |
| | $Zr(OnPr)_4$ | 2,1 | 1,4% | n.d. | ND | ND | 18 19 |
| Ex. 8 | $AlZr(EAA)_7$ | 2,1 | 4,3% | 6 min | 25 | 31 | 31 29 |
| Ex. 9 | $AlZr(OsBu)_3(OnPr)_4(diPrm)_2$ | 2,1 | 3,7% | 10 min | 16 | 29 | 30 26 |
| Ex. 10 | $AlTi(OiPr)_5(PAA)_2$ | 2,1 | 2,0% | 6 min | 26 | 26 | 32 24 |

Les complexes hétérométalliques conduisent rapidement, en moins de 15 minutes, à des élastomères aussi durs que ceux obtenus avec des catalyseurs de référence tels que le dilaurate de dibutylétain (DBTDL) et le tétrabutoxytitane $Ti(OnBu)_4$.

**Exemple** 5 : **Comparaison complexes monométalliques/hétérométalliques**

L'activité catalytique des complexes hétérométalliques selon l'invention a été comparée à l'activité catalytique des mélanges des complexes monométalliques.

Pour cela, des empâtages ont été préparés comme décrit dans l'exemple 4, puis mélangés d'une part avec un complexe hétérométallique selon l'invention et d'autre part avec le mélange in situ correspondant de deux complexes monométalliques.

Les résultats sont présentés dans le tableau 3 :

Tableau 3

| | Catalyseurs | mmol/ OH | % en pds | TFP | DSA 5h | DSA 1j | DSA 7j |
|---|---|---|---|---|---|---|---|
| | | | | 2 mm | 3 × 2 mm | | 6 mm < > |
| Ex. 11 | $AlZr(OsBu)_3(OnBu)_4$ | 1,6 | 2,0% | 8 min | 3 | 13 | 26 20 |
| comparatif | $Al(OsBu)_3$ | 1,6 | 1,2% | 12 min | 5 | 7 | 20 15 |
| | $Zr(OnBu)_4$ | 1,6 | 0,8% | | | | |
| Ex. 12 | $AlTi(OsBu)_3(OnBu)_4$ | 1,7 | 2,0% | 10 min | 17 | 27 | 31 25 |
| comparatif | $Al(OsBu)_3$ | 1,7 | 1,2% | 7 min | 16 | 27 | 30 22 |
| | $Ti(OnBu)_4$ | 1,7 | 0,8% | | | | |
| Ex. 13 | $AlZr(EAA)_3(OnPr)_4$ | 1,3 | 2,0% | 8 min | 14 | 27 | 32 27 |

(suite)

| | Catalyseurs | mmol/ OH | % en pds | TFP | DSA 5h | DSA 1j | DSA 7j |
|---|---|---|---|---|---|---|---|
| | | | | 2 mm | 3 × 2 mm | | 6 mm < > |
| comparatif | $Al(EAA)_3$ | 1,3 | 1,1% | 24 min | ND | ND | 17 15 |
| | $Zr(OnPr)_4$ | 1,3 | 0,9% | | | | |
| Ex. 14 | $AlTi(EAA)_3(OnBu)_4$ | 1,3 | 2,0% | 7 min | 21 | 29 | 34 28 |
| comparatif | $Al(EAA)_3$ | 1,3 | 1,1% | 20 min | 5 | 20 | 29 26 |
| | $Ti(OnBu)_4$ | 1,3 | 0,9% | | | | |

On observe une meilleure réactivité des catalyseurs hétérométalliques préformés par rapport aux alcoxydes monométalliques ajoutés in situ lors du test. On pense que, lors de la mise en contact in situ des complexes, aucune réaction d'association des complexes n'est possible puisqu'ils sont présents dans un milieu fortement dilué. La différence de dureté s'explique également par la formation de nouvelles espèces conduisant à une nouvelle réactivité par rapport aux espèces monométalliques. Ainsi, il est nécessaire de préformer le complexe hétérométallique avant son ajout dans la composition silicone.

On constate par ailleurs que les compositions contenant un catalyseur à base de zirconium, notamment les complexes Al-Zr, restent translucides même après un vieillissement accéléré (films de 2 mm placés 7 jours à 100°C).

On remarque également que les compositions contenant un catalyseur chélaté hétérométallique sont plus stables après un vieillissement accéléré (cartouches placées 3 semaines à 50°C) que celles contenant un catalyseur alcoxyde hétérométallique.

**Exemple 6 : Comportement en présence d'un agent promoteur d'adhérence**

Des empâtages ont été préparés comme décrit dans l'exemple 4 avec en outre 1% en poids d'un silane aminé (3-(2-aminoéthylamino)propyl-diméthoxyméthylsilane) utilisé classiquement comme agent promoteur d'adhérence. Ces empâtages ont été mélangés avec un catalyseur et l'activité catalytique de chaque composition a ensuite été évaluée comme dans l'exemple 3.

Les résultats des tests des catalyseurs alcoxydes en présence de promoteur d'adhérence sont présentés dans le tableau 4 :

Tableau 4

| | Catalyseurs | mmol/ OH | % en pds | TFP | DSA 5h | DSA 1j | DSA 7j |
|---|---|---|---|---|---|---|---|
| | | | | 2 mm | 3 × 2 mm | | 6 mm < > |
| Catalyseurs de références | DLDBE | 0,7 | 0,9% | 5 min | 25 | 29 | 31 29 |
| | $Ti(OnBu)_4$ | 2,1 | 1,4% | 20 min | NR | NR | NR |
| | $Al(OsBu)_3$ | 2,1 | 1,0% | 25 min | NR | NR | NR |
| | $Zr(OnPr)_4$ | 2,1 | 1,4% | 20 min | NR | NR | NR |
| Ex. 15 | $AlZr(OsBu)_3(OnBu)_4$ | 2,1 | 2,6% | n.d. | 8 | 9 | 13 28 |
| Comparatif | $Al(OsBu)_3$ | 2,1 | 1,0% | 10 min | C | D | D |
| | $Zr(OnBu)_4$ | 2,1 | 1,6% | | | | |
| Ex. 16 | $Al_2Zr(OC_4H_9)_{10}$ | 2,1 | 3,3% | 25 min | n.d. | 26 | 32 28 |
| Ex. 17 | $AlTi(OsBu)_3(OnBu)_4$ | 2,1 | 2,4% | n.d. | C | 9 | C 19 |
| Comparatif | $Al(OsBu)_3$ | 2,1 | 1,4% | 6 min | C | 3 | 6 21 |
| | $Ti(OnBu)_4$ | 2,1 | 1,0% | | | | |
| Ex. 18 | $Al_2Ti(OEH)_{10}$ | 2,1 | 5,9% | n.d. | n.d. | 22 | 36 31 |
| Comparatif | $Al(OEH)_3$ | 4,2 | 3,5% | 20 min | C | C | C |
| | $Ti(OEH)_4$ | 2,1 | 2,4% | | | | |

(suite)

| | **Catalyseurs** | **mmol/ OH** | **% en pds** | **TFP** | **DSA 5h** | **DSA 1j** | **DSA 7j** |
|---|---|---|---|---|---|---|---|
| | | | | **2 mm** | **3 × 2 mm** | | **6 mm < >** |
| Ex. 19 | $Al_2Ti(OC_4H_9)_{10}$ | 2,1 | 3,2% | 20 min | n.d. | 19 | 31 31 |

Les résultats des tests des catalyseurs chélates mixtes en présence de promoteur d'adhérence sont présentés dans le tableau 5 :

Tableau 5

| | **Catalyseurs** | **mmol/ OH** | **% en pds** | **TFP** | **DSA 5h** | **DSA 1j** | **DSA 7j** |
|---|---|---|---|---|---|---|---|
| | | | | **2 mm** | **3 × 2 mm** | | **6 mm < >** |
| catalyseurs de référence | DLDBE | 0,7 | 0,9% | 5 min | 25 | 29 | 31 29 |
| | $Ti(OiPr)_2(EAA)_2$ | 1,8 | 1,5% | 20 min | D | 15c | 28 25 |
| | $Al(EAA)_3$ | 2,1 | 1,0% | 10 min | C | D | c |
| Ex. 20 | $AlZr(EAA)_3(OnPr)_4$ | 1,3 | 2,0% | 5 min | C | D | 11 23 |
| Comparatif | $Al(EAA)_3$ | 1,3 | 1,1% | 17 min | C | C | C |
| | $Zr(OnPr)_4$ | 1,3 | 0,9% | | | | |
| Ex. 21 | $Al_2Zr(EAA)_6(OnPr)_4$ | 1,3 | 3,0% | 12 min | n.d. | 17 | 30 30 |
| Ex. 22 | $AlTi(EAA)_3(0nBu)_4$ | 1,5 | 2,0% | 5 min | C | 2 | 16 23 |
| Comparatif | $Al(EAA)_3$ | 1,5 | 1,1% | 18 min | C | D | D |
| | $Ti(OnBu)_4$ | 1,5 | 0,9% | | | | |

En présence du promoteur d'adhérence, il est possible d'effectuer la polycondensation avec le catalyseur à l'étain (DLDBE). Par contre, la présence du silane aminé inhibe complètement la réactivité des catalyseurs de l'art antérieur sans étain.

Les complexes hétérométalliques selon l'invention, qui ne contiennent pas d'étain, ont une activité catalytique même en présence du promoteur d'adhésion. On a constaté que la réaction catalysée était plus rapide lorsque le rapport molaire Al/Zr ou Al/Ti était de 2.

**Exemple 7 : Tests d'adhérences**

Pour réaliser des tests d'adhérence qualitative, un cordon de produit préparé à partir de la formulation décrite dans l'exemple 4 et du catalyseur à tester a été déposé sur des plaques de verre, de béton (côté face rugueuse) et d'aluminium anodisé préalablement nettoyés et brossés. Après une durée de réticulation de 7 jours (à 23°C et 50% HR), on a réalisé un pelage manuel après avoir fait une amorce de décollement à l'interface support/joint. Les résultats sont exprimés en fonction du type de rupture du cordon de produit :

- RA : rupture adhésive (le cordon se décolle du support) ;
- RA+ : rupture à tendance adhésive, mais nécessitant l'application d'une force pour décoller le cordon ;
- RA++ : rupture à tendance adhésive, mais nécessitant l'application d'une force importante pour décoller le cordon ;
- RC : rupture de type cohésive (le cordon rompt sous l'application d'une force très élevée, sans s'être décollé du support, même partiellement); dans ce cas l'adhérence sur le support est optimale.

Les résultats sont présentés dans le tableau 6 :

Tableau 6

| | Catalyseurs | Adhésion sur un support : | | |
|---|---|---|---|---|
| | | verre | béton | aluminium |
| Catalyseurs de références | DLDBE | RA | RA | RA |
| | $Zr(OnPr)_4$ | **RC** | RA | **RC** |
| | $Ti(OnBu)_4$ | RA | RA+ | RA+ |
| | $Ti(EAA)_2(OiPr)_2$ | RA | **RC** | **RC** |
| Ex. 23 | $AlZr(OsBu)_3\ (OnBu)_4$ | **RC** | RA | **RC** |
| Ex. 24 | $AlTi(OsBu)_3\ (OnBu)_4$ | **RC** | RA | **RC** |
| Comparatif | $Al(OsBu)_3 + Ti(OnBu)_4$ | **RC** | RA | RA+ |
| Ex. 25 | $AlZr(EAA)_3(OnPr)_4$ | **RC** | **RC** | **RC** |
| Ex. 26 | $AlTi(EAA)_3(OnBu)_4$ | **RC** | **RC** | **RC** |
| Comparatif | $Al(EAA)_3 + Ti(OnBu)_4$ | RA+ | **RC** | RA++ |

L'alcoxyde de zirconium permet d'obtenir des ruptures cohésives sur le verre et l'aluminium et adhésives sur le béton. Seul le catalyseur de référence chélate de titane permet l'adhésion aux trois supports. Quelle que soit la teneur en catalyseurs alcoxydes, les catalyseurs à base d'aluminium et de zirconium permettent une rupture cohésive sur le verre et l'aluminium et une rupture adhésive sur le béton. Les catalyseurs comportant des groupements chélates permettent d'obtenir des ruptures cohésives sur les trois supports. L'adhésion est perdue lorsque le mélange de catalyseurs monométalliques est effectué lors de la formulation. La présence du groupement chélate apporte l'adhérence de l'élastomère sur les supports. Il n'est donc pas nécessaire d'ajouter un promoteur d'adhérence comme avec la référence étain. La préformation du catalyseur est une fois encore indispensable pour un résultat optimal.

**Exemple 8** : **Tests colorimétriques**

Pour réaliser des tests de colorimétrie qualitative, un film de produit de 2 mm d'épaisseur a été préparé à partir de la formulation précédente et du catalyseur à tester. Après une durée de réticulation de 7 jours (à 23°C et 50% HR), l'opacité et la couleur jaune du film à travers une feuille blanche ont été évaluées qualitativement. Les résultats qualitatifs sont donnés en fonction des catalyseurs de références :

-- correspond à des élastomères transparent et sans couleur,

- correspond à film à tendance opaque,

+ correspond à un film un peu jaune,

++ correspond à un film jaune.

NH sera noté lorsque l'élastomère n'est pas homogène avec l'apparition de morceaux de catalyseurs non solubles dans l'huile.
Les résultats sont présentés dans le tableau 7 :

Tableau 7

| | Catalyseurs | colorimétrie | |
|---|---|---|---|
| | | Opacité | Jaune |
| Catalyseurs de références | DLDBE | **--** | **--** |
| | $Zr(OnPr)_4$ | **-** | **--** |
| | $Ti(OnBu)_4$ | **-** | **+** |
| | $Ti(EAA)_2(OiPr)_2$ | **--** | **++** |

(suite)

| | Catalyseurs | colorimétrie | |
|---|---|---|---|
| | | **Opacité** | **Jaune** |
| Ex. 27 | $AlZr(OsBu)_3(OnBu)_4$ | **--** | **--** |
| Comparatif | $Al(OsBu)_3$ + $Zr(OnBu)_4$ | **--** | **--** |
| Ex. 28 | $AlTi(OsBu)_3(OnBu)_4$ | **--** | **+** |
| Comparatif | $Al(OsBu)_3$ + $Ti(OnBu)_4$ | **--** | **+** |
| Ex. 29 | $AlZr(EAA)_3(OnPr)_4$ | **--** | **--** |
| Comparatif | $Al(EAA)_3$ + $Zr(OnBu)_4$ | **NH** | **NH et -** |
| Ex. 30 | $AlTi(EAA)_3(OnBu)_4$ | **-** | **++** |
| Comparatif | $Al(EAA)_3$ + $Ti(OnBu)_4$ | **NH** | **NH et +** |

Les films contenant des catalyseurs à base de titane sont un peu, voire complètement jaunes. Ceux catalysés par des mélanges d'espèces monométalliques ne sont pas homogènes. Par contre, les élastomères à base d'aluminium et de zirconium sont parfaitement translucides.

**Revendications**

**1.** Composition durcissable en présence d'eau ou d'humidité de l'air comprenant :

(A) au moins un polyorganosiloxane **A** ayant un ou plusieurs groupement(s) condensable(s) ou hydrolysable(s) et condensable(s), et
(B) au moins un composé **C**, capable de catalyser la réaction de condensation des groupements condensables ou hydrolysables et condensables du polyorganosiloxane **A**, et qui est un complexe hétérométallique dont la formule chimique comprend :

- au moins deux atomes métalliques M et M' différents, M étant un atome choisi dans le groupe constitué par les atomes des colonnes 2 et 13 du tableau périodique des éléments et M' étant un atome choisi dans le groupe constitué par les atomes de la colonne 4 du tableau périodique des éléments, et
- au moins un ligand alcoxyde ou chélatant.

**2.** Composition selon la revendication 1, **caractérisée en ce que** le composé C est un complexe hétérométallique dont la formule chimique comprend :

- au moins deux atomes métalliques M et M' différents, M étant un atome de magnésium (Mg) ou d'aluminium (Al), et de préférence un atome d'aluminium (Al), et M'étant un atome de titane (Ti) ou de zirconium (Zr), et
- au moins un ligand alcoxyde ou chélatant.

**3.** Composition selon la revendication 2, **caractérisée** en ce le composé C est choisi dans le groupe constitué par :

- les complexes hétérométalliques dont la formule chimique comprend :

  - au moins deux atomes métalliques M et M' différents, M étant l'aluminium et M' étant le zirconium et dans lesquels le rapport molaire Al/Zr = 0,5, 1 ou 2 ; et
  - au moins un ligand alcoxyde ou chélatant ; et

- les complexes hétérométalliques dont la formule chimique comprend :

  - au moins deux atomes métalliques M et M' différents, M étant l'aluminium et M' étant le titane et dans lesquels le rapport molaire Al/Ti = 1 ou 2, et
  - au moins un ligand alcoxyde ou chélatant.

**4.** Composition selon l'une quelconque des revendications 1 à 3, **caractérisée en ce que** le composé **C** est un complexe alcoxyde hétérométallique dont la formule chimique comprend :

- au moins deux atomes métalliques M et M' différents, M étant le magnésium ou l'aluminium et M'étant le titane ou le zirconium, et
- au moins un ligand alcoxyde ;

et de préférence ledit complexe alcoxyde hétérométallique est choisi dans le groupe constitué par :

- les complexes alcoxydes hétérométalliques dont la formule chimique comprend :
  - au moins deux atomes métalliques M et M' différents, M étant l'aluminium et M'étant le zirconium,
  - au moins un ligand alcoxyde de formule chimique O-(alkyle linéaire ou ramifié en $C_3$ à $C_{12}$), et
  - dans lesquels le rapport molaire Al/Zr vaut 0,5, 1 ou 2;

- les complexes alcoxydes hétérométalliques dont la formule chimique comprend :
  - au moins deux atomes métalliques M et M' différents, M étant le magnésium et M'étant le zirconium,
  - au moins un ligand alcoxyde de formule chimique O-(alkyle linéaire ou ramifié en $C_2$ à $C_{12}$), et
  - dans lesquels le rapport molaire Mg/Zr vaut 0,5, 1, 2, 3 ou 4 ; et

- les complexes alcoxydes hétérométalliques dont la formule chimique comprend :
  - au moins deux atomes métalliques M et M' différents, M étant l'aluminium et M' étant le titane,
  - au moins un ligand alcoxyde de formule chimique O-(alkyle linéaire ou ramifié en $C_3$ à $C_{12}$), et
  - dans lesquels le rapport molaire Al/Ti vaut 1 ou 2 ;

et de façon encore plus préférée ledit complexe alcoxyde hétérométallique est choisi dans le groupe constitué par $AlZr(OBu)_4(OsBu)_3$, $Al_2Zr(OnBu)_4(OsBu)_6$, $AlZr_2(OnBu)_{11}$, $AlTi(OsBu)_3(OnBu)_4$ et $Al_2Ti(OnBu)_{10}$.

**5.** Composition selon l'une quelconque des revendications 1 à 3, **caractérisée en ce que** le composé C est un complexe chélaté hétérométallique dont la formule chimique comprend :

- au moins deux atomes métalliques différents M et M', M étant le magnésium ou l'aluminium et M' étant le titane ou le zirconium, et
- au moins un ligand chélate ;

ledit complexe chélaté hétérométallique étant choisi de préférence dans le groupe constitué par :

- les complexes chélatés hétérométalliques dont la formule chimique comprend :
  - au moins deux atomes métalliques différents M et M', M étant l'aluminium et M' étant le zirconium,
  - au moins un ligand chélatant, de préférence choisi dans le groupe constitué par l'acétoacétate d'éthyle, l'acétoacétate de propyle et le malonate de diisopropyle,
  - éventuellement au moins un ligand alcoxyde de formule chimique O-(alkyle linéaire ou ramifié en $C_3$ ou $C_4$), et
  - ayant un rapport molaire Al/Zr = 1 ou 2 ;

- les complexes chélatés hétérométalliques dont la formule chimique comprend :
  - au moins deux atomes métalliques différents M et M', M étant l'aluminium et M' étant le zirconium,
  - au moins un ligand chélatant, de préférence choisi dans le groupe constitué par l'acétoacétate d'éthyle, l'acétoacétate de propyle et le malonate de diisopropyle,
  - ayant un rapport molaire Al/Zr = 1 ou 2, et
  - ne comprenant pas de ligand alcoxyde ;

- les complexes chélatés hétérométalliques dont la formule chimique comprend :

- au moins deux atomes métalliques différents M et M', M étant le magnésium et M' étant le zirconium,
- au moins un ligand chélatant, de préférence l'acétoacétate d'éthyle, et
- ayant un rapport molaire Mg/Zr = 1 ;

- les complexes chélatés hétérométalliques dont la formule chimique comprend :

- au moins deux atomes métalliques différents M et M', M étant l'aluminium et M' étant le titane,
- au moins un ligand chélatant, de préférence choisi dans le groupe constitué par l'acétoacétate d'éthyle et l'acétoacétate de propyle,
- éventuellement au moins un ligand alcoxyde de formule chimique O-(alkyle linéaire ou ramifié en $C_3$ ou $C_4$), et
- ayant un rapport molaire Al/Ti = 1 ; et

- les complexes chélatés hétérométalliques dont la formule chimique comprend :

- au moins deux atomes métalliques différents M et M', M étant le magnésium et M' étant le titane,
- au moins un ligand chélatant, de préférence l'acétoacétate d'éthyle,
- éventuellement au moins un ligand alcoxyde de formule chimique O-(alkyle linéaire ou ramifié en $C_3$), et
- ayant un rapport molaire Mg/Ti = 1 ;

et de façon encore plus préféré ledit complexe chélaté hétérométallique étant choisi dans le groupe constitué par $AlZr(EAA)_3(OnPr)_4$, $Al_2Zr(EAA)_6(OnPr)_4$, $AlZr(EAA)_7$, $Al_2Zr(EAA)_{10}$ et $AlTi(EAA)_3(OnBu)_4$.

**6.** Composition selon l'une quelconque des revendications 1 à 5, dans laquelle le polyorganosiloxane **A** comprend :

(i) au moins deux motifs siloxyles de formule (V) suivante :

$$R^4_a Z_b SiO_{\frac{4-(a+b)}{2}} \qquad (V)$$

dans laquelle :

- les symboles $R^4$, identiques ou différents, représentent des radicaux hydrocarbonés monovalents en $C_1$ à $C_{30}$,
- les symboles Z, identiques ou différents, représentent chacun un groupement hydrolysable et condensable ou un groupement hydroxy, et de préférence sont choisis dans le groupe constitué par les groupements hydroxy, alcoxy, alcoxy-alkylène-oxy, amino, amido, acylamino, aminoxy, iminoxy, cétiminoxy, acyloxy, iminoxy, cétiminoxy et énoxy,
- a est égal à 0, 1 ou 2, b est égal à 1, 2 ou 3, la somme a + b est égale à 1, 2 ou 3, et

(ii) éventuellement un ou plusieurs motif(s) siloxyle(s) de formule (VI) suivante :

$$R^5_c SiO_{\frac{4-c}{2}} \qquad (VI)$$

dans laquelle :

- les symboles $R^5$, identiques ou différents, représentent des radicaux hydrocarbonés monovalent en $C_1$ à $C_{30}$ éventuellement substitués par un ou plusieurs atomes d'halogène ou par des groupements amino, éther, ester, époxy, mercapto ou cyano, et
- le symbole c est égal à 0, 1, 2 ou 3.

**7.** Composition selon l'une quelconque des revendications 1 à 6 comprenant en outre un agent de réticulation **B.**

**8.** Composition selon la revendication 7 dans laquelle l'agent de réticulation **B** est un composé de silicium dont chaque molécule comprend au moins trois groupements hydrolysables et condensables Y, ledit agent de réticulation **B**

ayant la formule (XIII) suivante :

$$R^{20}_{(4-j)}SiY_j \qquad (XIII)$$

dans laquelle :

- le symbole $R^{20}$ est un radical hydrocarboné monovalent comprenant de 1 à 30 atomes de carbone,
- les symboles Y, identiques ou différents, sont choisis dans le groupe constitué par les groupements alcoxy, alcoxy-alkylène-oxy, amino, amido, acylamino, aminoxy, iminoxy, cétiminoxy, acyloxy ou énoxy, et de préférence Y est un groupement alcoxy, acyloxy, énoxy, cétiminoxy ou oxime,
- le symbole j = 3 ou 4.

**9.** Composition selon l'une quelconque des revendications 1 à 8, **caractérisée en ce qu'**elle contient en outre un agent promoteur d'adhérence **E.**

**10.** Composition monocomposante RTV-1 se présentant en un seul emballage **P** étanche à l'air et comprenant :

a) au moins un polyorganosiloxane **A** tel que défini dans la revendication 1 ou la revendication 6,
b) au moins un agent de réticulation **B,** de préférence tel que défini dans la revendication 8,
c) une quantité catalytiquement efficace d'au moins un composé C tel que défini dans l'une quelconque des revendications 1 à 5, et
d) éventuellement au moins une charge **D**.

**11.** Composition bicomposante RTV-2, précurseur de la composition selon l'une quelconque des revendications 1 à 9, se présentant en deux emballages distincts **P1** et **P2**, **caractérisée en ce que** :

c) l'emballage **P1** est étanche à l'air et comprend :

- une quantité catalytiquement efficace d'au moins un composé C tel que défini dans l'une quelconque des revendications 1 à 5, et
- au moins un agent de réticulation **B,** de préférence tel que défini dans la revendication 8, et

d) l'emballage **P2** ne contient ni ledit composé C ni ledit agent de réticulation **B** et comprend :

- pour 100 parties en poids d'au moins un polyorganosiloxane **A** tel que défini dans la revendication 1 ou la revendication 6, et
- de 0 à 10 partie(s) en poids d'eau.

**12.** Elastomère silicone obtenu :

- après avoir laissé durcir en présence d'eau ou d'humidité de l'air la composition telle que définie dans l'une quelconque des revendications 1 à 9 ; ou
- après avoir mis en contact avec l'humidité de l'air le contenu de l'emballage **P** de la composition monocomposante RTV-1 telle que définie dans la revendication 10 et laissé durcir ledit contenu ; ou
- après avoir mélangé le contenu des emballages **P1** et **P2** de la composition bicomposante RTV-2 telle que définie dans la revendication 11 et laissé durcir le mélange.

**13.** Utilisation d'un composé **C** tel que défini dans l'une quelconque des revendications 1 à 5, comme catalyseur d'une réaction de condensation d'un polyorganosiloxane ayant un ou plusieurs groupement(s) condensable(s) ou hydrolysable(s) et condensable(s).

**14.** Complexe chélaté hétérométallique de formule générale (IV) :

$$[M_mM'_n(Lig1)_x(Lig2)_y(Lig3)_z] \qquad (IV)$$

dans laquelle :

- le symbole M représente un atome de magnésium Mg ou d'aluminium Al ;

- le symbole M' représente un atome de titane Ti ou de zirconium Zr ;
- le symbole Lig1 représente un ligand alcoxyde ;
- le symbole Lig2 représente un ligand chélatant de formule générale (I) :

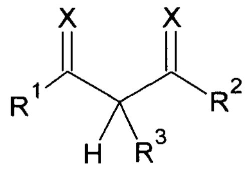

(I)

dans laquelle :

- chaque X représente indépendamment l'un de l'autre un atome d'oxygène ou un groupe NR', R' représentant un groupe alkyle en $C_1$ à $C_8$, éventuellement substitué une ou plusieurs fois par un atome d'halogène et/ou par un groupe aryle ;
- $R^1$ et $R^2$, indépendamment l'un de l'autre, représentent :
- un groupe alkyle ou cycloalkyle en $C_1$ à $C_8$, éventuellement substitué une ou plusieurs fois par un atome d'halogène et/ou par un groupe aryle,
- un groupe aryle, éventuellement substitué une ou plusieurs fois par un atome d'halogène,
- un groupe alcoxyde en $C_1$ à $C_8$, éventuellement substitué une ou plusieurs fois par un atome d'halogène et/ou par un groupe aryle,
- -OH,
- -NR"2, chaque R" représentant indépendamment l'un de l'autre un atome d'hydrogène ou un groupe alkyle en $C_1$ à $C_8$, éventuellement substitué une ou plusieurs fois par un atome d'halogène et/ou par un groupe aryle ;
- $R^3$ représente un groupe monovalent, de préférence un atome d'hydrogène ou un groupe alkyle en $C_1$ à $C_4$ ;

- le symbole Lig3 représente un ligand choisi dans le groupe constitué par : un ligand oxo, un ligand hydroxyde et un ligand alcool; et
- m, n, x, y et z sont des nombres tels que m > 0, n > 0, x ≥ 0, y > 0, z ≥ 0 et (x+y) > 0.

**15.** Procédé d'enduction de la composition selon l'invention et telle que définie ci-dessus sur un support souple **S** comprenant les étapes a), b) et c) suivantes :

a) on prépare une composition telle que définie dans l'une quelconque des revendications 1 à 9,
b) puis on dépose de manière continue ou discontinue ladite composition sur ledit support souple **S**, et
c) on laisse durcir ladite composition silicone en présence d'humidité apportée par l'air ambiant ou par addition préalable d'eau de manière à former un élastomère silicone.

## Patentansprüche

**1.** In Gegenwart von Wasser oder Luftfeuchtigkeit härtbare Zusammensetzung, umfassend:

(A) mindestens ein Polyorganosiloxan **A** mit einer oder mehreren kondensierbaren oder hydrolysierbaren und kondensierbaren Gruppen und
(B) mindestens eine Verbindung **C,** die zur Katalyse der Kondensationsreaktion der kondensierbaren oder hydrolysierbaren und kondensierbaren Gruppen des Polyorganosiloxans **A** befähigt ist und bei der es sich um einen Heterometallkomplex handelt, dessen chemische Formel Folgendes umfasst:

- mindestens zwei verschiedene Metallatome M und M', wobei M für ein Atom aus der Gruppe bestehend aus den Atomen der Gruppen 2 und 13 des Periodensystems steht und M' für ein Atom aus der Gruppe bestehend aus den Atomen der Gruppe 4 des Periodensystems der Elemente steht, und
- mindestens einen Alkoxid-Liganden oder Chelatbildner.

**2.** Zusammensetzung nach Anspruch 1, **dadurch gekennzeichnet, dass** es sich bei der Verbindung **C** um einen Heterometallkomplex handelt, dessen chemische Formel Folgendes umfasst:

- mindestens zwei verschiedene Metallatome M und M', wobei M für ein Magnesiumatom (Mg) oder Aluminiumatom (Al) und vorzugsweise ein Aluminiumatom (Al) steht und M' für ein Titanatom (Ti) oder Zirconiumatom (Zr) steht, und
- mindestens einen Alkoxid-Liganden oder Chelatbildner.

**3.** Zusammensetzung nach Anspruch 2, **dadurch gekennzeichnet, dass** die Verbindung **C** aus der Gruppe bestehend aus:

- Heterometallkomplexen, deren chemische Formel Folgendes umfasst:
  - mindestens zwei verschiedene Metallatome M und M', wobei M für Aluminium steht und M' für Zirconium steht, und in denen das Molverhältnis Al/Zr = 0,5, 1 oder 2; und
  - mindestens einen Alkoxid-Liganden oder Chelatbildner; und
- Heterometallkomplexen, deren chemische Formel Folgendes umfasst:
  - mindestens zwei verschiedene Metallatome M und M', wobei M für Aluminium steht und M' für Titan steht, und in denen das Molverhältnis Al/Ti = 1 oder 2; und
  - mindestens einen Alkoxid-Liganden oder Chelatbildner;

ausgewählt ist.

**4.** Zusammensetzung nach einem der Ansprüche 1 bis 3, **dadurch gekennzeichnet, dass** es sich bei der Verbindung **C** um einen Heterometallkomplex handelt, dessen chemische Formel Folgendes umfasst:

- mindestens zwei verschiedene Metallatome M und M', wobei M für Magnesium oder Aluminium steht und M' für Titan oder Zirconium steht, und
- mindestens einen Alkoxid-Liganden;

und vorzugsweise der Heterometallalkoxidkomplex aus der Gruppe bestehend aus

- Heterometallalkoxidkomplexen, deren chemische Formel Folgendes umfasst:
  - mindestens zwei verschiedene Metallatome M und M', wobei M für Aluminium steht und M' für Zirconium steht,
  - mindestens einen Alkoxid-Liganden der chemischen Formel O-(lineares oder verzweigtes $C_3$- bis $C_{12}$-Alkyl), und
  - in denen das Molverhältnis Al/Zr gleich 0,5, 1 oder 2 ist;
- Heterometallalkoxidkomplexen, deren chemische Formel Folgendes umfasst:
  - mindestens zwei verschiedene Metallatome M und M', wobei M für Magnesium steht und M' für Zirconium steht,
  - mindestens einen Alkoxid-Liganden der chemischen Formel O-(lineares oder verzweigtes $C_2$- bis $C_{12}$-Alkyl), und
  - in denen das Molverhältnis Mg/Zr gleich 0,5, 1, 2, 3 oder 4 ist; und
- Heterometallalkoxidkomplexen, deren chemische Formel Folgendes umfasst:
  - mindestens zwei verschiedene Metallatome M und M', wobei M für Aluminium steht und M' für Titan steht,
  - mindestens einen Alkoxid-Liganden der chemischen Formel O-(lineares oder verzweigtes $C_3$- bis $C_{12}$-Alkyl), und
  - in denen das Molverhältnis Al/Ti gleich 1 oder 2 ist;

ausgewählt ist;
und noch weiter bevorzugt der Heterometallalkoxidkomplex aus der Gruppe bestehend aus $AlZr(OBu)_4(OsBu)_3$, $Al_2Zr(OnBu)_4(OsBu)_6$,
$AlZr_2(OnBu)_{11}$, $AlTi(OsBu)_3(OnBu)_4$ und $Al_2Ti(OnBu)_{10}$ ausgewählt ist.

**5.** Zusammensetzung nach einem der Ansprüche 1 bis 3, **dadurch gekennzeichnet, dass** es sich bei der Verbindung **C** um einen Heterometallkomplex handelt, dessen chemische Formel Folgendes umfasst:

- mindestens zwei verschiedene Metallatome M und M', wobei M für Magnesium oder Aluminium steht und M' für Titan oder Zirconium steht, und
- mindestens einen Chelat-Liganden;

wobei der Heterometallchelatkomplex vorzugsweise aus der Gruppe bestehend aus:

- Heterometallchelatkomplexen, deren chemische Formel Folgendes umfasst:
    - mindestens zwei verschiedene Metallatome M und M', wobei M für Aluminium steht und M' für Zirconium steht,
    - mindestens einen Chelat-Liganden, der vorzugsweise aus der Gruppe bestehend aus Acetessigsäureethylester, Acetessigsäurepropylester und Malonsäuredieisopropylester ausgewählt ist,
    - gegebenenfalls mindestens einen Alkoxid-Liganden der chemischen Formel O-(lineares oder verzweigtes $C_3$- oder $C_4$-Alkyl), und
    - mit einem Molverhältnis Al/Zr = 1 oder 2;

- Heterometallchelatkomplexen, deren chemische Formel Folgendes umfasst:
    - mindestens zwei verschiedene Metallatome M und M', wobei M für Aluminium steht und M' für Zirconium steht,
    - mindestens einen Chelat-Liganden, der vorzugsweise aus der Gruppe bestehend aus Acetessigsäureethylester, Acetessigsäurepropylester und Malonsäuredieisopropylester ausgewählt ist,
    - mit einem Molverhältnis Al/Zr = 1 oder 2 und
    - ohne Alkoxid-Liganden;

- Heterometallchelatkomplexen, deren chemische Formel Folgendes umfasst:
    - mindestens zwei verschiedene Metallatome M und M', wobei M für Magnesium steht und M' für Zirconium steht,
    - mindestens einen Chelat-Liganden, vorzugsweise Acetessigsäureethylester, und
    - mit einem Molverhältnis Mg/Zr = 1;

- Heterometallchelatkomplexen, deren chemische Formel Folgendes umfasst:
    - mindestens zwei verschiedene Metallatome M und M', wobei M für Aluminium steht und M' für Titan steht,
    - mindestens einen Chelat-Liganden, der vorzugsweise aus der Gruppe bestehend aus Acetessigsäureethylester und Acetessigsäurepropylester ausgewählt ist,
    - gegebenenfalls mindestens einen Alkoxid-Liganden der chemischen Formel O-(lineares oder verzweigtes $C_3$- oder $C_4$-Alkyl), und
    - mit einem Molverhältnis Al/Ti = 1; und

- Heterometallchelatkomplexen, deren chemische Formel Folgendes umfasst:
    - mindestens zwei verschiedene Metallatome M und M', wobei M für Magnesium steht und M' für Titan steht,
    - mindestens einen Chelat-Liganden, vorzugsweise Acetessigsäureethylester,
    - gegebenenfalls mindestens einen Alkoxid-Liganden der chemischen Formel O-(lineares oder verzweigtes $C_3$-Alkyl), und

- mit einem Molverhältnis Mg/Ti = 1;

ausgewählt ist;
und wobei noch weiter bevorzugt der Heterometallchelatkomplex aus der Gruppe bestehend aus AlZr (EAA) $_3$ (OnPr) $_4$, $Al_2Zr$ (EAA) $_6$ (OnPr) $_4$, AlZr(EAA)$_7$, $Al_2Zr$ (EAA)$_{10}$ und AlTi(EAA)$_3$(OnBu)$_4$ ausgewählt ist.

**6.** Zusammensetzung nach einem der Ansprüche 1 bis 5, wobei das Polyorganosiloxan **A** Folgendes umfasst:

(i) mindestens zwei Siloxyleinheiten der folgenden Formel (V):

$$R^4_a Z_b SiO_{\frac{4-(a+b)}{2}} \qquad (V)$$

in der:

- die Symbole $R^4$ gleich oder verschieden sind und für einwertige $C_1$- bis $C_{30}$-Kohlenwasserstoffreste stehen,
- die Symbole Z gleich oder verschieden sind und jeweils für eine hydrolysierbare und kondensierbare Gruppe oder eine Hydroxygruppe stehen und vorzugsweise aus der Gruppe bestehend aus Gruppen des Typs Hydroxy, Alkoxy, Alkoxy-alkylen-oxy, Amino, Amido, Acylamino, Aminoxy, Iminoxy, Ketiminoxy, Acyloxy, Iminoxy, Ketiminoxy und Enoxy ausgewählt sind,
- a gleich 0, 1 oder 2 ist, b gleich 1, 2 oder 3 ist, die Summe a + b gleich 1, 2 oder 3 ist, und

(ii) gegebenenfalls einer oder mehreren Siloxyleinheiten der folgenden Formel (VI):

$$R^5_c SiO_{\frac{4-c}{2}} \qquad (VI)$$

in der:

- die Symbole $R^5$ gleich oder verschieden sind und für einwertige $C_1$- bis $C_{30}$-Kohlenwasserstoffreste, die gegebenenfalls durch ein oder mehrere Halogenatome oder durch Amino-, Ether-, Ester-, Epoxid-, Mercapto- oder Cyanogruppen substituiert sind, stehen und
- das Symbol c gleich 0, 1, 2 oder 3 ist.

**7.** Zusammensetzung nach einem der Ansprüche 1 bis 6, die außerdem ein Vernetzungsmittel **B** umfasst.

**8.** Zusammensetzung nach Anspruch 7, wobei es sich bei dem Vernetzungsmittel **B** um eine Siliciumverbindung handelt, bei der jedes Molekül mindestens drei hydrolysierbare und kondensierbare Gruppen Y umfasst, wobei das Vernetzungsmittel **B** die folgende Formel (XIII) aufweist:

$$R^{20}_{(4-j)}SiY_j \qquad (XIII)$$

in der:

- das Symbol $R^{20}$ für einen einwertigen Kohlenwasserstoffrest mit 1 bis 30 Kohlenstoffatomen steht,
- die Symbole Y gleich oder verschieden sind und aus der Gruppe bestehend aus Alkoxy-, Alkoxy-alkylen-oxy-, Amino-, Amido-, Acylamino-, Aminoxy-, Iminoxy-, Ketiminoxy-, Acyloxy- und Enoxygruppen ausgewählt sind und Y vorzugsweise für eine Alkoxy-, Acyloxy-, Enoxy-, Ketiminoxy- oder Oximgruppe steht,
- das Symbol j = 3 oder 4.

**9.** Zusammensetzung nach einem der Ansprüche 1 bis 8, **dadurch gekennzeichnet, dass** sie außerdem einen Haftvermittler **E** enthält.

**10.** RTV-1-Einkomponentenzusammensetzung, die in einer einzigen luftdichten Packung **P** verpackt ist und Folgendes umfasst:

a) mindestens ein Polyorganosiloxan **A** gemäß Anspruch 1 oder Anspruch 6,
b) mindestens ein Vernetzungsmittel **B,** vorzugsweise gemäß Anspruch 8,
c) eine katalytisch wirksame Menge mindestens einer Verbindung **C** gemäß einem der Ansprüche 1 bis 5 und
b) gegebenenfalls mindestens einen Füllstoff **D.**

**11.** RTV-2-Zweikomponentenzusammensetzung, die einen Vorläufer der Zusammensetzung nach einem der Ansprüche 1 bis 9 darstellt und in zwei separaten Packungen **P1** und **P2** vorliegt, **dadurch gekennzeichnet, dass**:

c) die Packung **P1** luftdicht ist und Folgendes umfasst:

- eine katalytisch wirksame Menge mindestens einer Verbindung **C** gemäß einem der Ansprüche 1 bis 5 und
- mindestens ein Vernetzungsmittel **B,** vorzugsweise gemäß Anspruch 8, und

d) die Packung **P2** weder die Verbindung **C** noch das Vernetzungsmittel **B** enthält und Folgendes umfasst:

- pro 100 Gewichtsteile mindestens eines Polyorganosiloxans **A** gemäß Anspruch 1 oder Anspruch 6 und
- 0 bis 10 Gewichtsteile Wasser.

**12.** Silikonelastomer, erhalten:

- nach Härtenlassen der Zusammensetzung gemäß einem der Ansprüche 1 bis 9 in Gegenwart von Wasser oder Luftfeuchtigkeit; oder
- nach Inkontaktbringen der Packung **P** der RTV-1-Einkomponentenzusammensetzung gemäß Anspruch 10 und Härtenlassen des Inhalts; oder
- nach Mischen des Inhalts der Packungen **P1** und **P2** der RTV-2-Zweikomponentenzusammensetzung gemäß Anspruch 11 und Härtenlassen der Mischung.

**13.** Verwendung einer Zusammensetzung **C** gemäß einem der Ansprüche 1 bis 5 als Katalysator für eine Kondensationsreaktion eines Polyorganosiloxans mit einer oder mehreren kondensierbaren oder hydrolysierbaren und kondensierbaren Gruppen.

**14.** Heterometallchelatkomplex der allgemeinen Formel (IV) :

$$[M_mM'_n(Lig1)_x(Lig2)_y(Lig3)_z] \qquad (IV)$$

in der:

- das Symbol M für ein Magnesiumatom Mg oder Aluminiumatom Al steht;
- das Symbol M' für ein Titanatom Ti oder Zirconiumatom Zr steht;
- das Symbol Lig1 für einen Alkoxid-Liganden steht;
- das Symbol Lig2 für einen Chelatliganden der allgemeinen Formel (I) steht:

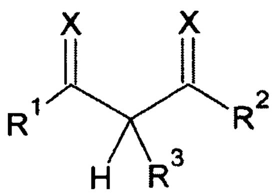

(I)

in der:

- X jeweils unabhängig voneinander für ein Sauerstoffatom oder eine NR'-Gruppe steht, wobei R' für eine $C_1$-$C_8$-Alkylgruppe, die gegebenenfalls ein- oder mehrfach durch ein Halogenatom und/oder durch eine Arylgruppe substituiert ist, steht;
- $R^1$ und $R^2$ unabhängig voneinander für

  - eine $C_1$-$C_8$-Alkyl- oder -Cycloalkylgruppe, die gegebenenfalls ein-oder mehrfach durch ein Halogenatom und/oder durch eine Arylgruppe substituiert ist,
  - eine Arylgruppe, die gegebenenfalls ein-oder mehrfach durch ein Halogenatom substituiert ist,
  - eine $C_1$-$C_8$-Alkoxidgruppe, die gegebenenfalls ein- oder mehrfach durch ein Halogenatom und/oder durch eine Arylgruppe substituiert ist,
  - -OH,
  - $-NR''_2$, wobei R'' jeweils unabhängig voneinander für ein Wasserstoffatom oder eine $C_1$-$C_8$-Alkylgruppe, die gegebenenfalls ein- oder mehrfach durch ein Halogenatom und/oder durch eine Arylgruppe substituiert ist, steht,

stehen;
- $R^3$ für eine einwertige Gruppe, vorzugsweise ein Wasserstoffatom oder eine $C_1$-$C_4$-Alkylgruppe, steht;
- das Symbol Lig3 für einen Liganden steht, der aus einem oxo-Liganden, einem Hydroxid-Liganden und einem Alkohol-Liganden ausgewählt ist; und
- m, n, x, y und z für solche Zahlen stehen, dass $m > 0$, $n > 0$, $x \geq 0$, $y > 0$, $z \geq 0$ und $(x + y) > 0$.

**15.** Verfahren zum Auftragen der erfindungsgemäßen Zusammensetzung gemäß obiger Definition auf einen flexiblen Träger **S,** das die folgenden Schritte a), b) und c) umfasst:

a) man stellt eine Zusammensetzung gemäß einem der Ansprüche 1 bis 9 her,
b) dann bringt man die Zusammensetzung kontinuierlich oder diskontinuierlich auf den flexiblen Träger **S** auf, und
c) man lässt die Silikonzusammensetzung in Gegenwart von Feuchtigkeit, die durch die Umgebungsluft oder durch vorherige Zugabe von Wasser bereitgestellt wird, zu einem Silikonelastomer härten.

## Claims

**1.** Composition that can be cured in the presence of water or atmospheric moisture comprising:

(A) at least one polyorganosiloxane **A** having one or more condensable or hydrolyzable and condensable group(s), and
(B) at least one compound **C,** capable of catalyzing the condensation reaction of the condensable or hydrolyzable and condensable groups of the polyorganosiloxane **A,** and which is a heterometallic complex whose chemical formula comprises:

- at least two different metal atoms M and M', M being an atom selected from the group consisting of the atoms in columns 2 and 13 of the periodic table and M' being an atom selected from the group consisting of the atoms in column 4 of the periodic table, and
- at least one alkoxide ligand or chelating ligand.

**2.** Composition according to Claim 1, **characterized in that** compound **C** is a heterometallic complex whose chemical formula comprises:

- at least two different metal atoms M and M', M being an atom of magnesium (Mg) or of aluminum (Al), and preferably an aluminum atom (Al), and M' being an atom of titanium (Ti) or of zirconium, (Zr), and
- at least one alkoxide ligand or chelating ligand.

**3.** Composition according to Claim 2, **characterized in that** compound **C** is selected from the group consisting of:

- the heterometallic complexes whose chemical formula comprises:

- at least two different metal atoms M and M', M being aluminum and M' being zirconium and in which the molar ratio Al/Zr = 0.5, 1 or 2; and
- at least one alkoxide ligand or chelating ligand; and

- the heterometallic complexes whose chemical formula comprises:

- at least two different metal atoms M and M', M being aluminum and M' being titanium and in which the molar ratio Al/Ti = 1 or 2, and
- at least one alkoxide ligand or chelating ligand.

**4.** Composition according to any one of Claims 1 to 3, **characterized in that** compound **C** is a heterometallic alkoxide complex whose chemical formula comprises:

- at least two different metal atoms M and M', M being magnesium or aluminum and M' being titanium or zirconium, and
- at least one alkoxide ligand;

and preferably said heterometallic alkoxide complex is selected from the group consisting of:

- the heterometallic alkoxide complexes whose chemical formula comprises:

  - at least two different metal atoms M and M', M being aluminum and M' being zirconium,
  - at least one alkoxide ligand of chemical formula O-(linear or branched $C_3$-$C_{12}$ alkyl), and
  - in which the molar ratio Al/Zr has the value 0.5, 1 or 2;

- the heterometallic alkoxide complexes whose chemical formula comprises:

  - at least two different metal atoms M and M', M being magnesium and M' being zirconium,
  - at least one alkoxide ligand of chemical formula O-(linear or branched $C_2$-$C_{12}$ alkyl), and
  - in which the molar ratio Mg/Zr has the value 0.5, 1, 2, 3 or 4; and

- the heterometallic alkoxide complexes whose chemical formula comprises:

  - at least two different metal atoms M and M', M being aluminum and M' being titanium,
  - at least one alkoxide ligand of chemical formula O-(linear or branched $C_3$-$C_{12}$ alkyl), and
  - in which the molar ratio Al/Ti has a value of 1 or 2;

and even more preferably said heterometallic alkoxide complex is selected from the group consisting of $AlZr(OBu)_4(OsBu)_3$, $Al_2Zr(OnBu)_4(OsBu)_6$, $AlZr_2(OnBu)_{11}$, $AlTi(OsBu)_3(OnBu)_4$ and $Al_2Ti(OnBu)_{10}$.

**5.** Composition according to any one of Claims 1 to 3, **characterized in that** compound **C** is a heterometallic chelated complex whose chemical formula comprises:

- at least two different metal atoms M and M', M being magnesium or aluminum and M' being titanium or zirconium, and
- at least one chelate ligand;

said heterometallic chelated complex preferably being selected from the group consisting of:

- the heterometallic chelated complexes whose chemical formula comprises:

  - at least two different metal atoms M and M', M being aluminum and M' being zirconium,
  - at least one chelating ligand, preferably selected from the group consisting of ethyl acetoacetate, propyl acetoacetate and diisopropyl malonate,
  - optionally at least one alkoxide ligand of chemical formula 0-(linear or branched $C_3$ or $C_4$ alkyl), and
  - having a molar ratio Al/Zr = 1 or 2;

- the heterometallic chelated complexes whose chemical formula comprises:

  - at least two different metal atoms M and M', M being aluminum and M' being zirconium,
  - at least one chelating ligand, preferably selected from the group consisting of ethyl acetoacetate, propyl acetoacetate and diisopropyl malonate,
  - having a molar ratio Al/Zr = 1 or 2, and
  - not comprising an alkoxide ligand;

- the heterometallic chelated complexes whose chemical formula comprises:

  - at least two different metal atoms M and M', M being magnesium and M' being zirconium,
  - at least one chelating ligand, preferably ethyl acetoacetate, and
  - having a molar ratio Mg/Zr = 1;

- the heterometallic chelated complexes whose chemical formula comprises:

  - at least two different metal atoms M and M', M being aluminum and M' being titanium,
  - at least one chelating ligand, preferably selected from the group consisting of ethyl acetoacetate and

propyl acetoacetate,
- optionally at least one alkoxide ligand of chemical formula O-(linear or branched $C_3$ or $C_4$ alkyl), and
- having a molar ratio Al/Ti = 1; and

- the heterometallic chelated complexes whose chemical formula comprises:

- at least two different metal atoms M and M', M being magnesium and M' being titanium,
- at least one chelating ligand, preferably ethyl acetoacetate,
- optionally at least one alkoxide ligand of chemical formula O-(linear or branched $C_3$ alkyl), and
- having a molar ratio Mg/Ti = 1;

and even more preferably said heterometallic chelated complex being selected from the group consisting of $AlZr(EAA)_3(OnPr)_4$, $Al_2Zr(EAA)_6(OnPr)_4$, $AlZr(EAA)_7$, $Al_2Zr(EAA)_{10}$ and $AlTi(EAA)_3(OnBu)_4$.

6. Composition according to any one of Claims 1 to 5, in which the polyorganosiloxane **A** comprises:

(i) at least two siloxyl units of the following formula (V):

$$R_a^4 Z_b SiO_{\frac{4-(a+b)}{2}} \qquad (V)$$

in which:

- the symbols $R^4$, which may be identical or different, represent monovalent $C_1$ to $C_{30}$ hydrocarbon radicals,
- the symbols Z, which may be identical or different, each represent a hydrolyzable and condensable group or a hydroxyl group, and preferably are selected from the group consisting of the hydroxyl, alkoxy, alkoxy-alkylene-oxy, amino, amido, acylamino, aminoxy, iminoxy, ketiminoxy, acyloxy, iminoxy, ketiminoxy and enoxy groups,
- a is equal to 0, 1 or 2, b is equal to 1, 2 or 3, the sum a + b is equal to 1, 2 or 3, and

(ii) optionally one or more siloxyl unit(s) of the following formula (VI):

$$R_c^5 SiO_{\frac{4-c}{2}} \qquad (VI)$$

in which:

- the symbols $R^5$, which may be identical or different, represent monovalent $C_1$-$C_{30}$ hydrocarbon radicals optionally substituted with one or more halogen atoms or with amino, ether, ester, epoxy, mercapto or cyano groups, and
- the symbol c is equal to 0, 1, 2 or 3.

7. Composition according to any one of Claims 1 to 6 further comprising a crosslinking agent **B.**

8. Composition according to Claim 7 in which the crosslinking agent **B** is a silicon compound, each molecule of which comprises at least three hydrolyzable and condensable groups Y, said crosslinking agent **B** having the following formula (XIII):

$$R^{20}_{(4-j)}SiY_j \qquad (XIII)$$

in which:

- the symbol $R^{20}$ is a monovalent hydrocarbon radical comprising from 1 to 30 carbon atoms,
- the symbols Y, which may be identical or different, are selected from the group consisting of the alkoxy, alkoxy-alkylene-oxy, amino, amido, acylamino, aminoxy, iminoxy, ketiminoxy, acyloxy or enoxy groups, and preferably Y is an alkoxy, acyloxy, enoxy, ketiminoxy or oxime group,

- the symbol j = 3 or 4.

**9.** Composition according to any one of Claims 1 to 8, **characterized in that** it additionally contains an adhesion promoter **E.**

**10.** Single-component composition RTV-1 that is in a single airtight package **P** and comprises:

a) at least one polyorganosiloxane **A** as defined in Claim 1 or Claim 6,
b) at least one crosslinking agent **B,** preferably as defined in Claim 8,
c) a catalytically effective amount of at least one compound **C** as defined in any one of Claims 1 to 5, and
d) optionally at least one filler **D.**

**11.** Two-component composition RTV-2, precursor of the composition according to any one of Claims 1 to 9, which is in two separate packages **P1** and **P2, characterized in that**:

a) package **P1** is airtight and comprises:

- a catalytically effective amount of at least one compound **C** as defined in any one of Claims 1 to 5, and
- at least one crosslinking agent **B,** preferably as defined in Claim 8, and

b) package **P2** contains neither said compound **C** nor said crosslinking agent **B** and comprises:

- per 100 parts by weight of at least one polyorganosiloxane **A** as defined in Claim 1 or Claim 6, and
- from 0 to 10 part(s) by weight of water.

**12.** Silicone elastomer obtained:

- after leaving the composition as defined in any one of Claims 1 to 9 to cure in the presence of water or atmospheric moisture; or
- after bringing the contents of package **P** of the single-component composition RTV-1 as defined in Claim 10 into contact with atmospheric moisture and leaving said contents to cure; or
- after mixing the contents of packages **P1** and **P2** of the two-component composition RTV-2 as defined in Claim 11 and leaving the mixture to cure.

**13.** Use of a compound **C** as defined in any one of Claims 1 to 5, as catalyst of a condensation reaction of a polyorganosiloxane having one or more condensable or hydrolyzable and condensable group(s).

**14.** Heterometallic chelated complex of general formula (IV) :

$$[M_m M'_n (Lig1)_x (Lig2)_y (Lig3)_z] \quad (IV)$$

in which:

- the symbol M represents an atom of magnesium Mg or of aluminum Al;
- the symbol M' represents an atom of titanium Ti or of zirconium Zr;
- the symbol Lig1 represents an alkoxide ligand;

the symbol Lig2 represents a chelating ligand of general formula (I):

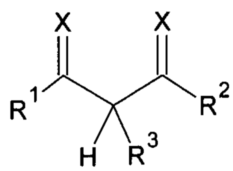

(I)

in which:

- each X represents, independently of one another, an oxygen atom or a group NR’, R’ representing a $C_1$ to $C_8$ alkyl group, optionally substituted one or more times with a halogen atom and/or with an aryl group;
- $R^1$ and $R^2$, independently of one another, represent:

  - a $C_1$ to $C_8$ alkyl or cycloalkyl group, optionally substituted one or more times with a halogen atom and/or with an aryl group,
  - an aryl group, optionally substituted one or more times with a halogen atom,
  - a $C_1$ to $C_8$ alkoxide group, optionally substituted one or more times with a halogen atom and/or with an aryl group,
  - -OH,
  - $-NR''_2$, each R’’ representing, independently of one another, a hydrogen atom or a $C_1$ to $C_8$ alkyl group, optionally substituted one or more times with a halogen atom and/or with an aryl group;

- $R^3$ represents a monovalent group, preferably a hydrogen atom or a $C_1$ to $C_4$ alkyl group;
- the symbol Lig3 represents a ligand selected from the group consisting of an oxo ligand, a hydroxide ligand and an alcohol ligand; and
- m, n, x, y and z are numbers such that $m > 0$, $n > 0$, $x \geq 0$, $y > 0$, $z \geq 0$ and $(x + y) > 0$.

**15.** Process for coating the composition according to the invention, as defined above, on a flexible substrate **S** comprising the following steps a), b) and c) :

a) preparing a composition as defined in any one of Claims 1 to 9,
b) then depositing said composition continuously or discontinuously on said flexible substrate **S**, and
c) leaving said silicone composition to cure in the presence of moisture supplied by the ambient air or by adding water beforehand so as to form a silicone elastomer.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2013036546 A
- WO 0149789 A
- FR 2856694
- FR 2638752
- US 2891920 A
- US 3294725 A
- FR 1126411
- FR 1179969
- FR 1189216
- FR 1198749
- FR 1248826
- FR 1314649
- FR 1423477
- FR 1432799
- FR 2067636
- US 3077465 A
- US 3382205 A
- US 3701753 A
- US 3957714 A
- US 4115356 A
- US 4273698 A
- FR 2429811
- FR 2459820
- FR 1371250
- US 3678003 A
- US 3986999 A
- GB 1468467 A
- BE 901479
- EP 157580 A
- WO 9829488 A
- FR 978058
- FR 1025150
- FR 1108764
- FR 1370884
- EP 141685 A
- EP 147323 A
- EP 102268 A
- EP 21859 A
- FR 2121289
- FR 2121631
- EP 118325 A
- EP 117772 A
- EP 10478 A
- EP 50358 A
- EP 184966 A
- US 3801572 A
- US 3888815 A


### Littérature non-brevet citée dans la description


- **WALTER NOL.** Chemistry and Technology of Silicones. 1968, 395-398